(19) Europäisches Patentamt
European Patent Office
Office européen des brevets

(11) **EP 4 641 655 A1**

(12) **EUROPEAN PATENT APPLICATION**

(43) Date of publication:
**29.10.2025 Bulletin 2025/44**

(21) Application number: **25169153.1**

(22) Date of filing: **08.04.2025**

(51) International Patent Classification (IPC):
$H01M\ 4/131^{(2010.01)}$ $C01G\ 53/00^{(2025.01)}$
$H01M\ 4/36^{(2006.01)}$ $H01M\ 4/505^{(2010.01)}$
$H01M\ 4/525^{(2010.01)}$ $H01M\ 4/58^{(2010.01)}$

(52) Cooperative Patent Classification (CPC):
H01M 4/5825; C01G 53/00; H01M 4/131;
H01M 4/364; H01M 4/505; H01M 4/525

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.04.2024 KR 20240054513**

(71) Applicant: **SAMSUNG SDI CO., LTD.**
**Yongin-si, Gyeonggi-do 17084 (KR)**

(72) Inventors:
• **KIM, Young-Ki**
**Yongin-si, Gyeonggi-do 17084 (KR)**
• **CHOI, Aram**
**Yongin-si, Gyeonggi-do 17084 (KR)**
• **KIM, Sangmi**
**Yongin-si, Gyeonggi-do 17084 (KR)**
• **DOO, Sungwook**
**Yongin-si, Gyeonggi-do 17084 (KR)**
• **KANG, Gwiwoon**
**Yongin-si, Gyeonggi-do 17084 (KR)**
• **LEE, Soonrewl**
**Yongin-si, Gyeonggi-do 17084 (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY AND POSITIVE ELECTRODE INCLUDING THE POSITIVE ELECTRODE ACTIVE MATERIAL, AND RECHARGEABLE LITHIUM BATTERY INCLUDING THE POSITIVE ELECTRODE ACTIVE MATERIAL**

(57) A positive electrode active material comprising first particles comprising a compound having an olivine structure, second particles having a spinel structure, and third particles having a layered structure, where the amount of the third particles is about 10 parts by weight to about 50 parts by weight based on 100 parts by weight of the positive electrode active material is disclosed, along with positive electrodes including the positive electrode active materials and a rechargeable lithium battery including the positive electrodes.

FIG. 7

EP 4 641 655 A1

**Description**

BACKGROUND

The present disclosure herein relates to a positive electrode active material for a rechargeable lithium battery and a positive electrode including the positive electrode active material, and a rechargeable lithium battery including the positive electrode active material. More particularly, the present disclosure relates to a positive electrode active material including an olivine-based lithium compound and a positive electrode including the same, and a rechargeable lithium battery including the same.

With the rapid spread of electronic devices that use batteries, such as mobile phones, laptop computers, and electric vehicles, the demand for rechargeable batteries with high energy density and high capacity has rapidly increased. Accordingly, research and development to improve the performance of rechargeable lithium batteries is being actively conducted.

A rechargeable lithium battery includes a positive electrode and a negative electrode containing active materials capable of intercalation and deintercalation of lithium ions, and an electrolyte. A rechargeable lithium battery produces electrical energy through the oxidation and reduction reactions when lithium ions are intercalated into and deintercalated from the positive electrode and negative electrode.

SUMMARY

The present disclosure provides a positive electrode active material that is economical and has high energy density, high average voltage, and excellent lifetime characteristics.

The present disclosure also provides a positive electrode that is economical and has high energy density, high average voltage, and excellent lifetime characteristics.

According to a first aspect of the present invention there is provided a positive electrode active material comprising first particles comprising a compound of Chemical Formula 1 and having an olivine structure, second particles comprising a compound of Chemical Formula 2 and having a spinel structure, and third particles comprising a compound of Chemical Formula 3 and having a layered structure. The amount of the third particles is about 10 parts by weight to about 50 parts by weight (e.g., about 15 parts by weight to about 50 parts by weight) based 100 parts by weight of the positive electrode active material.

$$\text{Chemical Formula 1:} \qquad Li_{a1}Mn_{x1}Fe_{y1}A_{z1}PO_{4-c1}$$

In Chemical Formula 1, $0.8<a1\leq1.2$, $0.4\leq x1\leq0.8$, $0\leq y1\leq0.6$ (e.g., $0.15\leq y1\leq0.6$), $0\leq z1\leq0.05$ (e.g., $0.001\leq z1\leq0.05$), $0\leq c1\leq0.05$, $x1+y1+z1=1$ and A is at least one of Al, Ti, V, and Mg.

$$\text{Chemical Formula 2:} \qquad Li_{a2}Mn_{x2}By_2O_{4-c2}$$

In Chemical Formula 2, $0.8<a2\leq1.2$, $1.9\leq x2\leq2.05$, $0\leq y2\leq0.05$ (e.g., $0.001\leq y2\leq0.05$), $0\leq c2\leq0.05$, and B is at least one of Al and Mg.

$$\text{Chemical Formula 3:} \qquad Li_{a3}Ni_{x3}Co_{y3}Mn_{z3}E_{w1}O_{2-c3}$$

In Chemical Formula 3, $0.8<a3\leq1.2$, $0.5\leq x3\leq0.8$, $0\leq y3\leq0.10$, $0.1\leq z3\leq0.35$, $0\leq w1\leq0.1$ (e.g., $0.01\leq w1\leq0.1$), $0\leq c3\leq0.05$, and E is at least one of Al, Ti, Mg, Zr, Mo, and Nb.

According to a second aspect of the present invention there is provided a positive electrode for a rechargeable lithium battery comprising a positive electrode current collector, and a positive electrode active material layer on the positive electrode current collector. The positive electrode active material layer comprises the aforementioned positive electrode active material, a conductive material, and a binder.

At least some of the above and other features of the invention are set out in the claims.

BRIEF DESCRIPTION OF THE FIGURES

The accompanying drawings are included to provide a further understanding of the present disclosure, and are incorporated in and constitute a part of this specification. The drawings illustrate embodiments of the present disclosure and, together with the description, serve to explain principles of the present disclosure.

    FIG. 1 is a simplified conceptual diagram showing a rechargeable lithium battery according to some embodiments of the present disclosure.

FIGS. 2 to 5 show rechargeable lithium batteries according to embodiments, where FIG. 2 is a cylindrical battery, FIG. 3 is a prismatic battery, and FIGS. 4 and 5 are pouch-type batteries.

FIGS. 6 to 9 are enlarged views showing positive electrode active material layers of a rechargeable lithium battery according to some embodiments of the present disclosure.

FIG. 10A is a pair of scanning electron microscope (SEM) images showing a positive electrode active material of Preparation Example 1-1 of the present disclosure.

FIG. 10B is a pair of SEM images showing a positive electrode active material of Preparation Example 1-2 of the present disclosure.

FIG. 11 is a pair of SEM images showing a positive electrode active material of Preparation Example 1-3 of the present disclosure.

FIG. 12 is a pair of SEM images showing a positive electrode active material of Preparation Example 1-4 of the present disclosure.

FIG. 13 is a pair of SEM images showing a positive electrode active material of Preparation Example 1-5 of the present disclosure.

## DETAILED DESCRIPTION

In order to sufficiently understand the configuration and effect of the present disclosure, some embodiments of the present disclosure will be described with reference to the accompanying drawings. It should be noted, however, that the present disclosure is not limited to the following embodiments, and may be implemented in various forms. Rather, the embodiments are provided only to disclose the present disclosure and allow those skilled in the art to fully understand the scope of the present disclosure.

In this description, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average diameter ($D_{50}$) where a cumulative volume is about 50 vol% in a particle size distribution. The average diameter ($D_{50}$) may be measured by methods widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, the average diameter ($D_{50}$) value may be obtained through a calculation. As other methods, a laser scattering method may be utilized to measure the average diameter ($D_{50}$). In the laser scattering method, a target particle is distributed in a distribution solvent, introduced into a laser scattering particle-diameter measurement device (e.g., MT3000 commercially available from Microtrac, Inc), and then irradiated with ultrasonic waves of 28 kHz at a power of 60 W. The average diameter ($D_{50}$) is calculated in the 50% standard of particle diameter distribution in the measurement device.

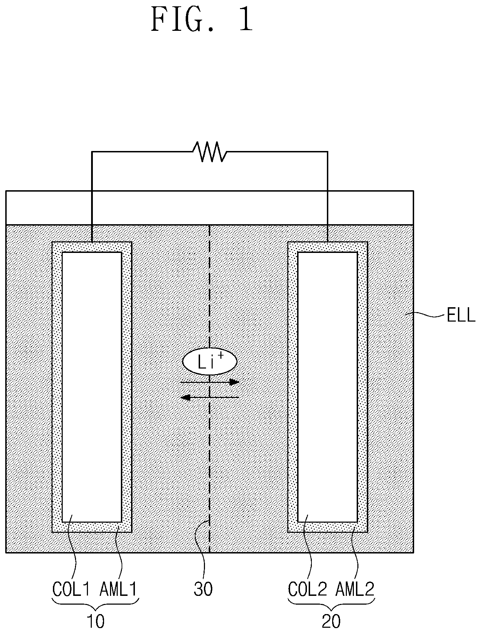

FIG. 1 is a cross-sectional view of a rechargeable lithium battery according to embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode

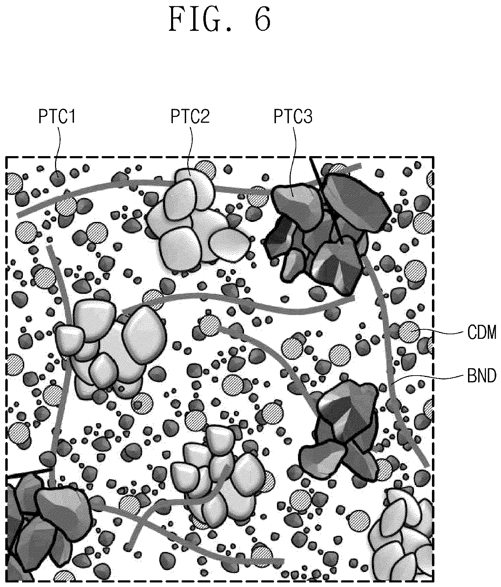

The positive electrode 10 for a rechargeable lithium battery includes a current collector COL1 and a positive electrode active material layer AML1 formed on the current collector COL1. The positive electrode active material layer AML1 includes a positive electrode active material, a binder and a conductive material. The positive electrode active material layer AML1 according to embodiments of the present disclosure will be described below with reference to FIGS. 6 to 9. Aluminium may be used for the current collector COL1, but the present disclosure is not limited thereto.

**Negative Electrode**

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other and also to attach the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity to the electrode. Any material that does not cause chemical change (e.g., does not cause an undesirable chemical change in the rechargeable lithium battery) and conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The negative current collector COL2 may include a copper foil, a nickel foil, a stainless-steel foil, a titanium foil, a nickel foam, a copper foam, a polymer substrate coated with a conductive metal, or a combination thereof.

**Negative Electrode Active Material**

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and at least one metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x < 2$), a Si-Q alloy, or a combination thereof. In the Si-Q alloy, Q may be selected from an alkali metal, an alkaline-earth metal, a Group 13 element, a Group 14 element (excluding Si), a Group 15 element, a Group 16 element, a transition metal, a rare earth element, or a combination thereof. The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surfaces of the silicon particles. For example, the silicon-carbon composite may include secondary particles (core) in which primary silicon particles are assembled, and an amorphous carbon coating layer (shell) on the surface of the secondary particle. The amorphous carbon may also be provided between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

## Separator

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene, e.g. TEFLON™,, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited to these examples.

The organic material and the inorganic material may be mixed in one coating layer, or a coating layer including an organic material and a coating layer including an inorganic material may be stacked.

## Electrolyte Solution

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used. The cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato)borate (LiBOB).

**Rechargeable Lithium Battery**

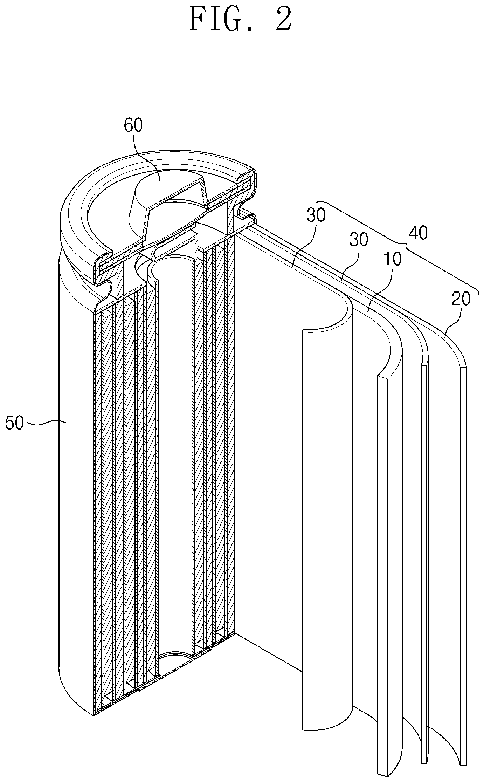

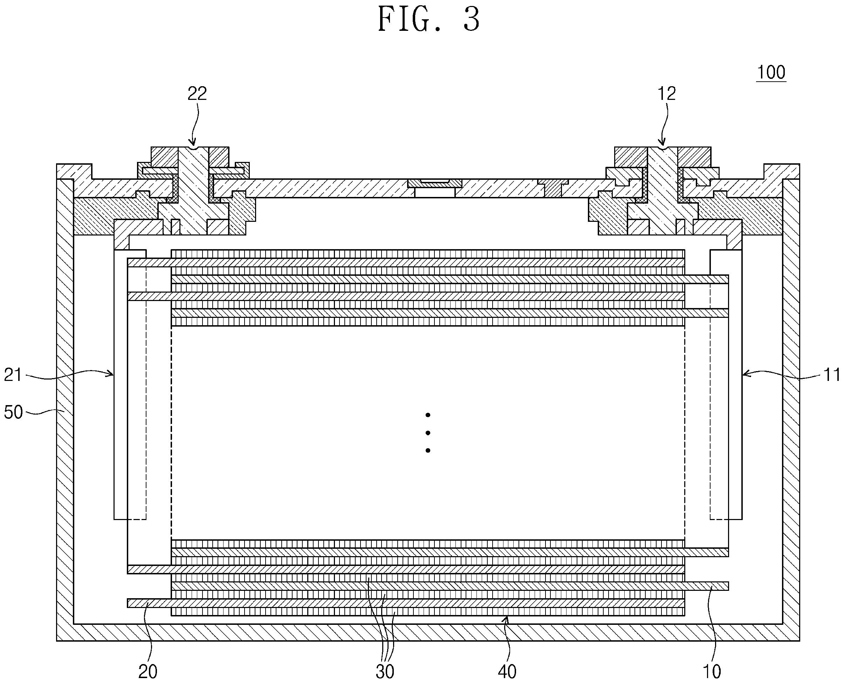

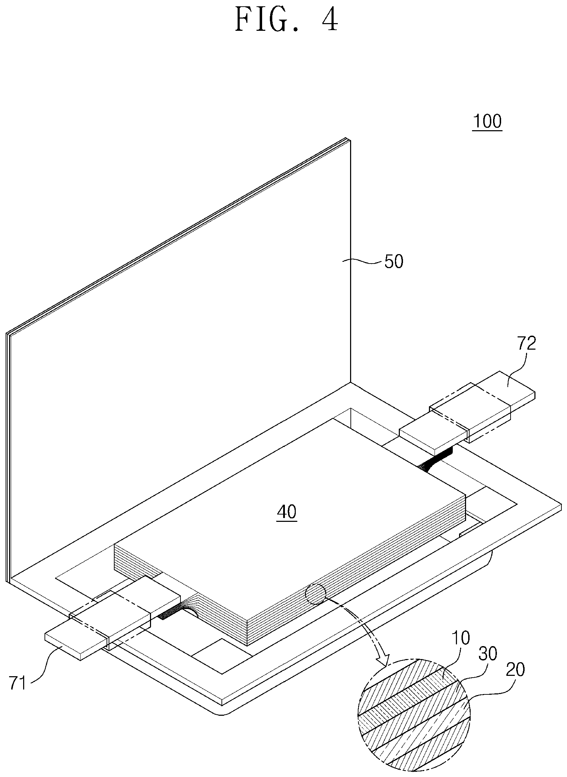

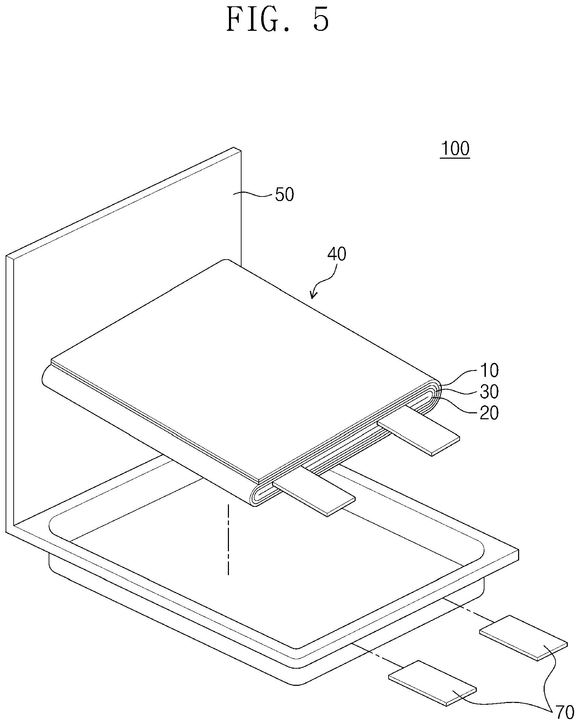

The rechargeable lithium battery may be classified into cylindrical, prismatic, pouch, or coin-type batteries, and the like depending on its shape. FIGS. 2 to 5 are schematic views illustrating rechargeable lithium batteries according to embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to outside of the battery.

Rechargeable lithium batteries according to embodiments may be used in automobiles, mobile phones, and/or various types of electric devices, as non-limiting examples.

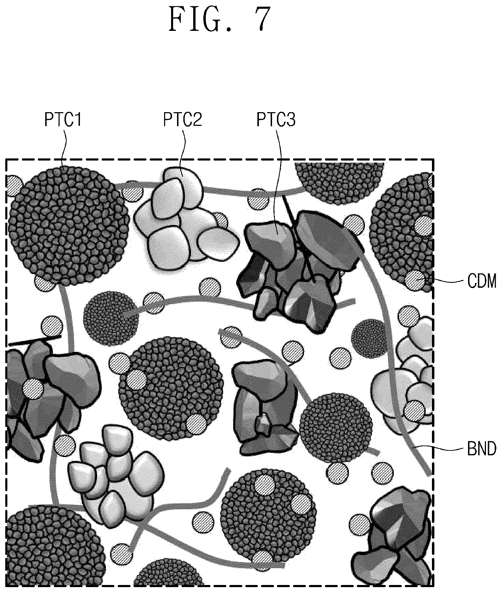

FIGS. 6 to 9 are enlarged views of positive electrode active material layers of a rechargeable lithium battery according to embodiments of the present disclosure. Referring to FIGS. 6 and 7, as discussed above, a positive electrode active material layer AML1 (see FIG. 1) includes first particles PTC1, second particles PTC2, third particles PTC3, a conductive material CDM, and a binder BND. A plurality of the first particles PTC1, a plurality of the second particles PTC2 and a plurality of the third particles PTC3 may constitute a first active material according to embodiments of the present disclosure.

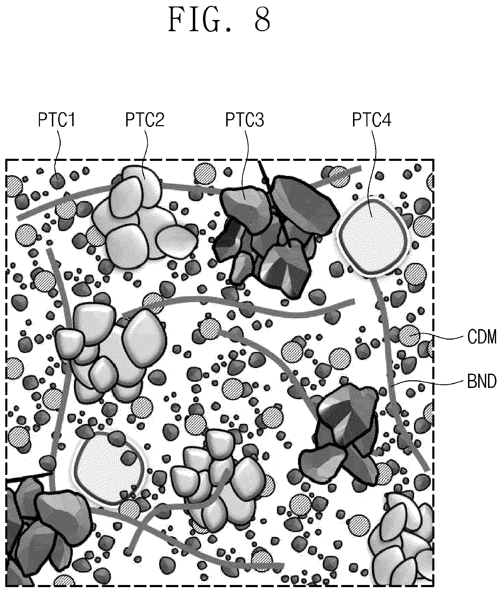

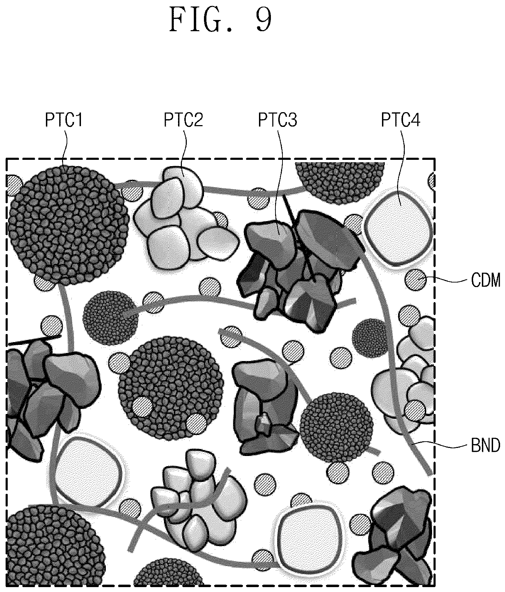

Referring to FIGS. 8 and 9, the positive electrode active material layer AML1 may further include fourth particles PTC4. A plurality of the first particles PTC1, a plurality of the second particles PTC2, a plurality of the third particles PTC3, and a plurality for the fourth particles PTC4 may constitute a second active material according to some embodiments of the present disclosure.

The amount of the first active material (PTC1, PTC2 and PTC3) in the positive electrode active material layer AML1 may be about 90 wt% to 99 wt %, or about 90 wt% to about 99.5 wt% relative to 100 wt% of the positive electrode active material layer AML1. Each of the amounts of the binder BND and the conductive material CDM may be about 0.25 wt% to about 5 wt%, or about 0.5 wt% to about 5 wt% relative to 100 wt% of the positive electrode active material layer AML1.

If the positive electrode active material layer AML1 further includes the fourth particles PTC4, the second active material (PTC1, PTC2, PTC3 and PTC4) may be about 90 wt% to 99 wt %, or about 90 wt% to about 99.5 wt% relative to 100 wt% of the positive electrode active material layer AML1. Each of the contents of the binder BND and the conductive material CDM may be about 0.25 wt% to about 5 wt%, or about 0.5 wt% to about 5 wt% relative to 100 wt% of the positive electrode active material layer AML1.

The binder BND may combine the first particles PTC1, the second particles PTC2, the third particles PTC3, the fourth particles PTC4 and the conductive material CDM with each other. The binder BND may include at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon. However, the present disclosure is not limited to these examples.

The conductive material CDM may be used to improve the conductivity of the positive electrode active material layer AML\1. Any conductive material that does not cause a chemical change in the positive electrode active material layer \AML1 may be used without limitation as the conductive material CDM. For example, the conductive material CDM may include: a carbon-based material such as natural graphite, artificial graphite, carbon black, acetylene black, Ketjen black, carbon fiber, carbon nano-fiber, and carbon nano-tube; a metal-based material containing copper, nickel, aluminium, silver or the like and having a metal powder or metal fiber form; a conductive polymer such as a polyphenylene derivative; or a mixture thereof.

Hereinafter, each of the first particles \PTC1, the second particles PTC2, the third particles PTC3 and the fourth particles PTC4 will be described in more detail.

**First Particles**

The first particles PTC1 include a lithium compound with an olivine structure, represented by Chemical Formula 1:

$$Li_{a1}Mn_{x1}Fe_{y1}A_{z1}PO_{4-c1}$$

In Chemical Formula 1, $0.8 < a1 \leq 1.2$, $0.4 \leq x1 \leq 0.8$, $0 \leq y1 \leq 0.6$ (e.g., $0.15 \leq y1 \leq 0.6$), $0 \leq z1 \leq 0.05$ (e.g., $0.001 \leq z1 \leq 0.05$), $0 \leq c1 \leq 0.05$, $x1 + y1 + z1 = 1$. A is a dopant doped in the first particles and is at least one of Al, Ti, V, and Mg.
The dopant may have the effect of controlling the first primary particles of the first particle PTC1 to grow uniformly, thereby improving the charge and discharge efficiency, low-temperature properties, and lifetime characteristics of a rechargeable lithium battery that includes the first particles.
The first particles PTC1 have advantages in having high economic feasibility, excellent structural stability, and high energy density. Since iron is a main component, the first particles PTC1 are relatively inexpensive, and since the first particles PTC1 are structurally stable, chemical changes may be relatively little even when the particles are subjected to repeated charging and discharging.
The first particles PTC1 are a lithium iron phosphate-based (hereinafter, LFP) positive electrode active material having an olivine crystal structure, wherein iron is partially substituted with manganese. Since the first particles PTC1 include manganese, a higher average voltage and higher energy density compared to the LFP may be achieved.
In an embodiment, each of the first particles PTC1 may include a coating layer on the surface thereof. The coating layer may cover the entire surface of the first particle PTC1 or may cover a portion of the surface of the first particle PTC1. For example, the coating layer may include carbon and/or a carbon-containing compound. The first particles PTC1 may have improved structural stability and electrical conductivity due to the coating layers.
The coating layer may further include at least one of an aluminium-containing compound, a titanium-containing compound, a magnesium-containing compound and a vanadium-containing compound. A metal-containing compound such as the aluminium-containing compound, the titanium-containing compound, the magnesium-containing compound and the vanadium-containing compound may be, for example, a metal oxide, a metal hydroxide, a metal carbonate, a synthesized compound thereof or a mixture thereof. The metal-containing compound may further include other metal or non-metal elements. For example, the metal-containing compound may further include lithium.
The first particles PTC1 may further include carbon derived from the coating layers. The amount of carbon in the first particles PTC1 may be about 0.5 wt% to about 5 wt%, about 0.5 wt% to about 3 wt%, or about 0.5 wt% to about 2 wt%. The amount of carbon may be measured using Thermogravimetric Analysis (TGA), CHNS Elemental Analysis, or X-ray Photoelectron Spectroscopy (XPS). Carbon element analysis according to embodiments of the present disclosure may be performed by an Elementar Micro Cube elemental analyzer. Embodiments of the operation method and conditions are as follows. About 1-2 mg of a sample was weighed in a tin cup, put in an automatic sampling tray, brought into a combustion tube via a ball valve, and burned at a combustion temperature of about 1000 °C. After that, the burned gas was reduced using reducing copper to form carbon dioxide. The carbon dioxide may be detected using a thermal conductivity detector (TCD).
In the method for measuring the carbon content according to embodiments of the present disclosure, scanning electron microscopy-energy dispersive X-ray spectroscopy (SEM-EDS) was performed with respect to the surface of the particles, and quantitative analysis was performed. As the method for measuring the carbon content, an inductively coupled plasma-mass spectrometry (ICP-MS), an inductively coupled plasma optical emission spectroscopy (ICP-OES) and/or the like may be used in addition to the SEM-EDS.
The first particles PTC1 may have a single particle form and/or secondary particle form. For example, the first particles PTC1 may be present only in a single particle form, only in a secondary particle form, or in a form in which single particles and secondary particles are mixed. Hereinafter, the first particles PTC1 of a single particle form will be explained referring to FIG. 6, and the first particles PTC1 of a secondary particle form will be explained referring to FIG. 7.
In an embodiment, referring to FIG. 6, the first particle PTC1 may have a single particle form. In the description, the single particle may mean a sole particle that does not have a grain boundary inside. The single particle has a morphology phase, and may mean a single particle, a monolith structure, a monolithic structure, or a non-agglomerated particle, in which the particles exist as an independent phase that are not agglomerated. For example, the single particle may be a single crystal. Otherwise, the single particle may be a particle containing several crystals. The single particle may be a solely separated form.
If the first particles PTC1 are single particles, each of the first particles PTC1 may include at least one first primary particle. Primary particles also may be particles that are combined to make a secondary particle form. In embodiments, the first particles PTC1 may have spherical or elliptical shapes, in which the first primary particles are attached. In another embodiment, though the first primary particles attached, the first particle PTC1 may not have spherical shapes but instead may have a random shapes.

If the first particles PTC1 are single particles, the first particles PTC1 may be provided in various sizes. For example, the average diameter of the first particles PTC1 may be about 0.5 $\mu$m to about 2.5 $\mu$m, or about 1 $\mu$m. The minimum particle diameter of the first particles PTC1, that is, the size of the first primary particles may be about 100 nm to about 500 nm, or about 100 nm to about 200 nm. In an embodiment, the average diameter may be measured by a particle size analyzer. The average diameter may mean the diameter of particles ($D_{50}$) at an accumulated volume of about 50 vol% in particle size distribution.

In an embodiment, the minimum diameter, that is, the size of the first primary particles may mean a diameter measured by randomly selecting about 30 primary particles in an electron microscope image on the first particles PTC1.

If the first particles PTC1 are single particles, the porosity of the first particles PTC1 may be less than about 20%. The span value of the first particles PTC1, analyzed by a particle size analyzer, may be in a range from about 0.3 to about 0.75. The porosity·(n) may be defined as the pore volume ($V_p$) divided by the total volume·($V_t$) of a particle, or

$$n = \frac{V_p}{V_t}$$

. The porosity (n) may be measured by Mercury Intrusion Porosimetry (MIP), gas adsorption methods such as BET analysis, or a combination of helium pycnometry and bulk density measurement.

Referring to FIG. 7 again, in other embodiments the first particles PTC1 may have a secondary particle form. The secondary particles may have a polycrystal form and are a form in which at least two or more first primary particles are agglomerated. In other words, one first particle PTC1 may include a plurality of first primary particles that are agglomerated with each other. The first particles PTC1 may have spherical or elliptical shapes.

In an embodiment, if the first particles PTC1 have a secondary particle form, the first particles PTC1 may further include a grain boundary coating layer on the surface of each of the first primary particles. The grain boundary coating layers may be present in the first particles PTC1. The grain boundary coating layers may be formed along the interface between the first primary particles inside the first particles PTC1. In other words, the grain boundary coating layers may indicate a material coated on the grain boundaries in the first particles PTC1. The grain boundary coating layers may include carbon and/or a carbon-containing compound. The grain boundary coating layer may further include at least one of an aluminium-containing compound, a titanium-containing compound, a magnesium-containing compound and a vanadium-containing compound.

If the first particles PTC1 are secondary particles, the interiors of the above-described first particles PTC1 may mean the entire interior of the first particles PTC1 excluding the surface of the first particle PTC1. For example, the interiors of the first particles PTC1 may mean an entire interior from a depth of about 10 nm from the surface of the first particle PTC1, or a region from a depth of about 10 nm to a depth of about 2 $\mu$m.

When the first particles PTC1 are secondary particles and first particles PTC1 further include the grain boundary coating part, structural stability may be reinforced, and a uniform coating layer may be formed on the surfaces of the first particles PTC1. In addition, the electrical conductivity of the first particles PTC1 may be further improved.

When the first particles PTC1 are secondary particles, the first particles PTC1 may further include carbon derived from the coating layers and/or grain boundary coating layers. The amount of carbon in the first particles PTC1 may be about 0.5 wt% to about 10 wt%, about 1 wt% to about 3 wt%, or about 1.5 wt% to about 2.5 wt%. The amount of carbon may be determined as described above. If the first particles PTC1 are secondary particles, the amount of carbon may be greater than a case where the first particles PTC1 are single particles.

If the first particles PTC1 are secondary particles, the average diameter of the first particles PTC1 may be about 2 $\mu$m to about 15 $\mu$m, about 3 $\mu$m to about 10 $\mu$m, or about 3 $\mu$m to about 7 $\mu$m. For example, the average diameter of the first particles PTC1 may be about 5 $\mu$m. As discussed above, the average diameter may be measured using a particle size analyzer. The average diameter may mean the diameter ($D_{50}$) of particles at an accumulated volume of about 50 vol% in particle size distribution.

If the first particles PTC1 are secondary particles, the average diameter of the first primary particles may be less than about 200 nm. For example, the average diameter of the first primary particles may be about 10 nm to about 200 nm, about 20 nm to about 200 nm, about 50 nm to about 200 nm, about 50 nm to 150 nm, or about 100 nm to about 200 nm. In embodiments, the average diameter of the first primary particles may mean a diameter measured by randomly selecting about 30 primary particles in an electron microscope image on the positive electrode active material. The size of the first primary particles may be uniform.

If the first particles PTC1 have a secondary particle form, the diameter of the first primary particles may be smaller compared to a case where the first particles PTC1 are single particles. For example, the diameter of the first primary particles in the case where the first particles PTC1 have a secondary particle form may be about 50 nm smaller than the diameter of the first primary particles in the case where the first particles PTC1 have a single crystal form.

If the first particles PTC1 are secondary particles, the average particle diameter of the first particles PTC1 and the average diameter of the first primary particles satisfy the above-described ranges, and if the size (diameter) of the first primary particles is uniform, the charge and discharge capacity and the capacity at low temperature of a rechargeable lithium battery including the particles may be improved.

If the first particles PTC1 are secondary particles, the porosity of the first particles PTC1 may be about 20% to about 40%. Here, porosity (n) may be defined as the pore volume ($V_p$) divided by the total volume ($V_t$) of a particle, or n =

$$\frac{V_p}{V_t}$$

The span value of the first particles PTC1 analyzed by a particle size analyzer may be about 0.3 to about 0.75.

If the first particles PTC1 are secondary particles, the positive electrode active material layer AML1 (see FIG. 1) may be smoothly attached to a current collector COL1 with a relatively small amount of a binder BND. For example, the amount of the binder BND may be about 0.5 wt% to about 3 wt% on the basis of about 100 wt% of the positive electrode active material layer AML1. These amounts of binders are possible because of an increase in the interaction between the first particles PTC1 and the current collector COL1 and because the average diameter of the first particles PTC1 is large. If the amount of the binder BND contained in the positive electrode active material layer AML1 is reduced, the amount of an active material may be increased accordingly, thereby improving the capacity and energy density of a battery. In addition, by reducing the amount of the binder that increases resistance, the electrical conductivity of a positive electrode may be improved.

## Second Particles

The second particles PTC2 include a lithium compound with a spinel structure, represented by Chemical Formula 2:

$$Li_{a2}Mn_{x2}B_{y2}O_{4-c2}$$

In Chemical Formula 2, $0.8 < a2 \leq 1.2$, $1.9 \leq x2 \leq 2.05$, $0 \leq y2 \leq 0.05$ (e.g., $0.001 \leq y2 \leq 0.05$), $0 \leq c2 \leq 0.05$, and B is a dopant that is at least one of Al and Mg. The dopant may have the effect of causing the second primary particles to grow uniformly, thereby improving the charge and discharge efficiency, low-temperature properties, and lifetime characteristics of a rechargeable lithium battery.

In one or more embodiments, in Chemical Formula 2, $0.8 < a2 \leq 1.2$, $1.95 \leq x2 \leq 2.05$, $0 \leq y2 \leq 0.05$, $0 \leq c2 \leq 0.05$, $2 \leq x2 + y2 \leq 2.1$ may be satisfied. In one or more embodiments, in Chemical Formula 2, $0.8 < a2 \leq 1.2$, $1.95 \leq x2 \leq 2$, $0 \leq y2 \leq 0.05$, $0 \leq c2 \leq 0.05$, $x2 + y2 = 2$ may be satisfied.

The second particles (PTC2) have advantages of high output properties, high structural stability, high average voltage, and excellent lifetime characteristics. The second particles PTC2 have a spinel structure composed of the lattice structure of tetrahedra and octahedra. Since the lattice structure has various passages, lithium ions may be smoothly intercalated/deintercalated, resulting in excellent output properties. The second particles PTC2 includes manganese and therefore may be structurally stable. Because of the structural stability, electrochemical properties of the particles may be maintained even at a high voltage, allowing the operation of a battery including the particles at a high voltage and providing excellent lifetime characteristics to the battery.

The second particles PTC2 are lithium manganese oxide and may be a positive electrode material in which cobalt is substituted with manganese in lithium cobalt oxide. In an embodiment of the present disclosure, the amount of cobalt in the second particles PTC2 may be very small that it is effectively omitted. For example, the amount of cobalt in the second particles PTC2 may be about 100 ppm or less. As the cobalt is substantially omitted from the positive electrode active material according to the present disclosure, and a rechargeable lithium battery that is economical and has high capacity and operating voltage may be provided.

Referring to FIGS. 6 and 7 again, the second particles PTC2 may have a polycrystal form and may each include a secondary particle in which at least two or more second primary particles are agglomerated. In other words, one second particle PTC2 may include a plurality of second primary particles that are agglomerated with each other. The second particles PTC2 may have agglomerated spherical shapes of the second primary particles. But the agglomerated second primary particles agglomerate, the second particle PTC2 also may have random shapes.

The average diameter of the second particles PTC2 may be about 3 μm to about 20 μm, about 3 μm to about 10 μm, or about 4 μm to about 15 μm, or about 5 μm to about 10 μm. For example, the average diameter of the second particles PTC2 may be about 6 μm. As discussed above, the average diameter may be measured by a particle size analyzer. The average diameter may mean the diameter ($D_{50}$) of particles at an accumulated volume of about 50 vol% in particle size distribution.

The average diameter of the second primary particles constituting the second particles PTC2 may be about 3 μm or less. For example, the diameter of the second primary particles may be about 300 nm to about 3 μm, about 0.5 μm to about 3 μm, about 1 μm to about 3 μm, or about 2 μm to about 3 μm. In embodiments, the average diameter of the second primary particles may mean a diameter measured by randomly selecting about 30 primary particles in an electron microscope image on the positive electrode active material. The size of the second primary particles may be uniform. The average diameter of the second primary particles may be greater than the average diameter of the first primary particles. The difference between the average diameter of the second primary particles and the average diameter of the first primary particles may be about 300 nm or more.

In an embodiment, the second particles PTC2 may include second coating layers on the surfaces thereof. By including the second coating layers, structural collapse of the second particles PTC2 due to repeated charging and discharging may be effectively suppressed.

The second coating layers may include an aluminium-containing compound, a magnesium-containing compound, or a combination thereof. A metal-containing compound in the second coating layers may be, for example, a metal oxide, a metal hydroxide, a metal carbonate, a synthesized compound thereof or a mixture thereof. The metal-containing compounds may further include other metal or nonmetal elements. For example, the second coating layers may further include lithium, manganese, and/or nickel.

A method for measuring the metal content in the second coating layers of the second particles PTC2 may include performing scanning electron microscopy-energy dispersive X-ray spectroscopy (SEM-EDS) on the second particles PTC2. Through the analysis, the aluminium and/or magnesium contents in the second coating layer may be confirmed. As a method for measuring the metal content in the second coating layers, an inductively coupled plasma-mass spectrometry (ICP-MS), an inductively coupled plasma optical emission spectroscopy (ICP-OES) or the like may be used in addition to the SEM-EDS.

**Third Particles**

The third particles PTC3 include a lithium compound represented by Chemical Formula 3:

$$Li_{a3}Ni_{x3}Co_{y3}Mn_{z3}E_{w1}O_{2-c3}$$

In Chemical Formula 3, $0.8<a3\leq1.2$, $0.5\leq x3\leq0.8$, $0\leq y3\leq0.10$, $0.1\leq z3\leq0.35$, $0\leq wl\leq0.1$ (e.g., $0.01<wl<0.1$), $0\leq c3\leq0.05$, and E is a dopant selected from Al, Ti, Mg, Zr, Mo, and Nb. The dopant may improve the surface stability and structural stability of the third particles PTC3.

In one or more embodiments, in Chemical Formula 3, $0.8<a3\leq1.2$, $0.5\leq x3\leq0.8$, $0.05\leq y3\leq0.15$, $0.1\leq z3\leq0.35$, $0\leq w1\leq0.1$, $0\leq c3\leq0.05$, and $x3 + y3 + z3 + w1 = 1$ may be satisfied.

The amount of cobalt in the third particles PTC3 is about 10 mol% or less. The amount of cobalt means the amount of cobalt relative to transition metals excluding lithium in the third particles PTC3.

The third particles PTC3 provide advantages of excellent lifetime characteristics high energy density.

In embodiments, referring to FIG. 6, the third particle PTC3 may have a single particle form. The third particles PTC3 may include at least one third primary particle. In embodiments, the third particles PTC3 may have spherical or elliptical shapes in which the third primary particles are attached. In another embodiment, though the third primary particles attached, the third particles PTC3 may not have spherical shapes but instead may have a random shape.

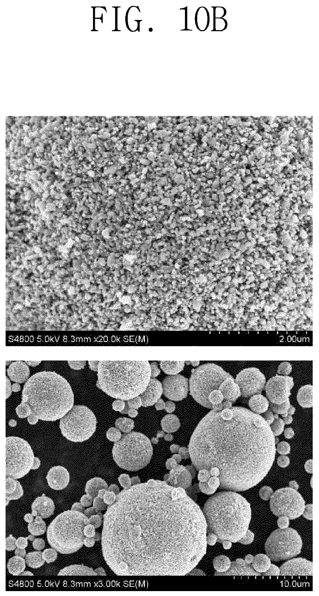

Referring to FIGS. 10B, 11, and 12, if the third particles PTC3 in a single particle form have an attached form of the third primary particles, the third particles PTC3 in a single particle form may be less structured than the above-described first particles PTC1 with a secondary particle form and the second particles PTC2 with a secondary particle form. That is, the third particle PTC3 may be in a more random form.

In an embodiment, each of the third particles PTC3 may include a third coating layer on the surface thereof. By including the third coating layers, structural collapse of the third particles PTC3 due to repeated charging and discharging may be effectively suppressed. Accordingly, the lifetime characteristics of a rechargeable battery including the third particles may be improved.

The third coating layers may include an aluminium-containing compound, a titanium-containing compound, a magnesium-containing compound, a zirconium-containing compound, a molybdenum-containing compound, a niobium-containing compound, or a combination thereof. A metal-containing compound in the third coating layers may be a metal oxide, a metal hydroxide, a metal carbonate, a synthesized compound thereof or a mixture thereof. The metal-containing compound may further include other metal or nonmetal elements. For example, the third coating layers may further include lithium, manganese, and/or nickel.

The average diameter of the third particles PTC3 may be about 2 $\mu$m to about 15 $\mu$m, about 2 $\mu$m to about 10 $\mu$m, or about 2 $\mu$m to about 5 $\mu$m. For example, the average diameter of the third particles PTC3 may be about 6 $\mu$m. The average diameter of the third particles PTC3 may be greater than the average diameter of the first particles PTC1. As discussed above, the average diameter may be measured by a particle size analyzer. The average diameter ($D_{50}$) may mean the diameter of particles at an accumulated volume of about 50 vol% in particle size distribution.

If the third particles PTC3 have a form in which a plurality of third primary particles are attached to each other, the average diameter of the third primary particles may be greater than the average diameter of the first particles PTC1.

A method for measuring the metal content in the third coating layers of the third particles PTC3 may include performing scanning electron microscopy-energy dispersive X-ray spectroscopy (SEM-EDS) on the third particles PTC3. Through the analysis, the aluminium, titanium, magnesium, zirconium, molybdenum and/or niobium contents in the third coating layer may be confirmed. As a method for measuring the metal content in the third coating layers, an inductively coupled plasma-mass spectrometry (ICP-MS), an inductively coupled plasma optical emission spectroscopy (ICP-OES) or the like may be used in addition to the SEM-EDS.

The third particles PTC3 include a lithium nickel-based composite oxide as a nickel-based active material. In an embodiment, the third particles PTC3 may include a high nickel-based positive electrode active material containing the high content of nickel. The high nickel-based positive electrode active material may provide for high capacity and high performance.

**Fourth Particles**

The fourth particles include a lithium compound represented by Chemical Formula 4:

$$Li_{a4}Ni_{x4}Mn_{y4}D_{z4}O_{c4}$$

In Chemical Formula 4, $1.1 < a4 \leq 1.6$, $0.2 \leq x4 \leq 0.5$, $0.5 \leq y4 \leq 0.8$, $0 \leq z4 \leq 0.05$, $2 \leq c4 \leq 2.3$, and D is a dopant that is at least one transition metal having an oxidation number of 4. The dopant may improve the surface stability and structural stability of the fourth particles PTC4.

In one or more embodiments, in Chemical Formula 4, $1.1 < a4 \leq 1.6$, $0.2 \leq x4 \leq 0.5$, $0.5 \leq y4 \leq 0.8$, $0 \leq z4 \leq 0.05$, $2 \leq c4 \leq 2.3$, and $x4 + y4 + z4 = 1$ may be satisfied.

The fourth particles PTC4 have advantages of high capacity an energy density.

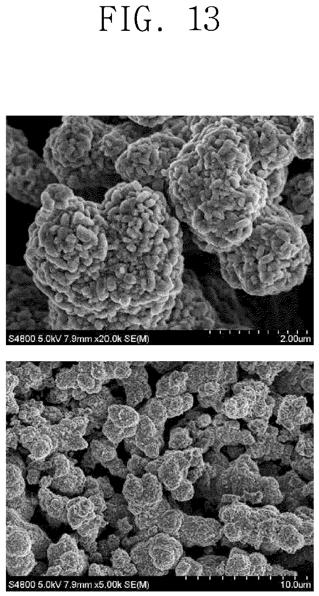

The fourth particles PTC4 may have a single particle form and/or a secondary particle form. Hereinafter, the fourth particle PTC4 with a single particle form will be explained referring to FIG. 8, and the fourth particle PTC4 with a secondary particle form will be explained referring to FIG. 13.

If the fourth particle PTC4 is a single particle, the fourth particle PTC4 may include a fourth primary particle. In an embodiment, the fourth particles PTC4 may have spherical or elliptical shapes, in which fourth primary particles are attached. In other embodiments, though the fourth primary particles attached, the fourth particles PTC4 may not have spherical shapes but instead may have random shapes.

In FIGS. 8 and 9, the fourth particles PTC4 with a form including only one particle are shown. But the fourth particles PTC4 may have spherical or elliptical shapes in which two or more fourth primary particles are attached, or a random shape.

If the fourth particles PTC4 are single particles, the fourth particles PTC4 may be provided in various sizes. For example, the average diameter of the fourth particles PTC4 may be about 3 $\mu$m to about 7 $\mu$m. The minimum diameter of the fourth particles PTC4, that is, the size of the fourth primary particles, may be about 100 nm to about 300 nm. The average diameter of the fourth particles PTC4 may be greater than the average diameter of the first particles PTC1. If the fourth particles PTC4 include a plurality of single particles, the average diameter of the fourth primary particles of the fourth particles PTC4 may be greater than the average diameter of the first primary particles.

In an embodiment, each of the fourth particles PTC4 may include a fourth coating layer on the surface thereof. The coating layers may suppress structural collapse of the fourth particles PTC4 due to repeated charging and discharging. Accordingly, the coating layers may improve the lifetime characteristics of a rechargeable battery including the fourth particles.

The fourth coating layers may include a boron-containing compound, an aluminium-containing compound, or a combination thereof. For example, a metal-containing compound in the fourth coating layers may be a metal oxide, a metal hydroxide, a metal carbonate, a synthesized compound thereof or a mixture thereof. The metal-containing compound may further include other metal or nonmetal elements. For example, the fourth coating layers may further include lithium, manganese, and/or nickel.

Referring to FIG. 13, in another embodiment, the fourth particles PTC4 may have a secondary particle form. The secondary particles may have a polycrystal form in which at least two or more fourth primary particles are agglomerated. In other words, the fourth particles PTC4 may include a plurality of fourth primary particles agglomerated with each other. More specifically, the fourth particles PTC4 with the secondary particle form may be in an agglomerate form that may be divided into a group of unit structure. The agglomerate form that may be divided into a group of unit structure may be less spherical than the first particles PTC1 in the secondary particle form. In the agglomerate that may be divided into a group of unit structure, boundaries in the agglomerate may not be clear compared to the first particles PTC1 in the secondary particle form.

For example, the fourth particles PTC4 may have a random form in which fourth primary particles are agglomerated as in FIG. 13. Referring to FIGS. 10B and 13, the agglomerated shape of the fourth primary particles may be relatively more irregular than the above-described agglomerated shape of the first primary particles.

If the fourth particles PTC4 are secondary particles, the average diameter of the fourth particles PTC4 may be about 5 $\mu$m to about 10 $\mu$m. For example, the average diameter of the fourth particles PTC4 may be about 7 $\mu$m. The average diameter of the fourth particles PTC4 may be greater than the average diameter of the first particles PTC1. As discussed above, the average particle diameter may be measured by a particle size analyzer. The average diameter means the diameter ($D_{50}$) of particles at an accumulated volume of about 50 vol% ($D_{50}$) in particle size distribution.

If the fourth particles PTC4 are secondary particles, the average diameter of the fourth primary particles may be about 500 nm or less. For example, the average diameter of the fourth primary particles may be about 100 nm to about 500 nm. In embodiments, the average diameter of the fourth primary particles may mean a diameter measured by optionally selecting about 30 primary particles in an electron microscope image on the positive electrode active material. The size of the fourth primary particles may be uniform.

In embodiments, if the fourth particles PTC4 has a secondary particle form, a grain boundary coating layer may be formed on the surface of each of the fourth primary particles. The grain boundary coating layers may be present within the fourth particles PTC4. For example, the grain boundary coating layer may be formed along the interface between the fourth primary particles inside each of the fourth particles PTC4. In other words, the grain boundary coating layer may mean a material coated on the grain boundary in a fourth particle PTC4. The grain boundary coating layers may include at least one transition metals having an oxidation number of 4. For example, the grain boundary coating layer may include a boron-containing compound, an aluminium-containing compound, or a combination thereof.

If the fourth particles PTC4 are secondary particles, the interiors of the fourth particles PTC4 may mean the entire interior of the fourth particles PTC4 excluding the surfaces of the fourth particles PTC4. For example, the interior of a fourth particle PTC4 may mean an entire interior from a depth of about 10 nm from the surface of the fourth particle PTC4, or a region from a depth of about 10 nm to a depth of about 2 $\mu$m.

If the fourth particles PTC4 are secondary particles, including the grain boundary coating part, structural stability may be reinforced, and a uniform coating layer may be formed on the surfaces of the fourth particles PTC4. In addition, when the fourth particles PTC4 further include the grain boundary coating part, lifetime characteristics of a rechargeable battery may be further improved.

In embodiments of the present disclosure, cobalt may be substantially omitted from the fourth particles PTC4. For example, the amount of cobalt from the fourth particles PTC4 may be about 100 ppm or less. In addition, cobalt may also be substantially omitted from the second particles PTC2. As cobalt may be substantially omitted in the positive electrode active material according to the present disclosure, a rechargeable lithium battery that is economical and has high capacity and operating voltage may be provided.

Also, the fourth particles PTC4 according to embodiments of the present disclosure may include $Li_{1.5}Ni_{0.25}Mn_{0.75}O_2$. However, this is only an illustration, and the present disclosure is not limited thereto. Further, fourth particles PTC4 may be a lithium manganese-based oxide (LMR) containing excessive lithium and have a mixed structure of a layered phase ($LiMnO_2$) and a rock salt phase ($Li_2MnO_3$). During the charge and discharge process, the rock salt phase is activated and high capacity may be achieved by additionally developed capacity through an oxygen redox reaction.

#### First Active Material

Referring to FIGS. 6 and 7, the first active material according to some embodiments of the present disclosure will be explained in more detail. The first active material of the present disclosure may include the first particles PTC1, the second particles PTC2 and the third particles PTC3.

In the first active material, the first particles PTC1 and the second particles PTC2 may constitute a main active material. On the basis of about 100 parts by weight of the first active material, the amount of the main active material may be about 50 parts by weight to about 85 parts by weight.

In the main active material, the mixing ratio of the first particles PTC1 and the second particles PTC2 may be about 40:60 to about 70:40, or about 40:60 to about 65:35, based on the weight.

The amount of manganese in the main active material may be about 50 mol% to about 90 mol%, or about 60 mol% to about 80 mol%. The amount of manganese means the amount of Mn relative to metal elements in the main active material excluding lithium.

If the main active material satisfies the mixing ratio ranges and the manganese content ranges, the low lifetime characteristics of the first particles PTC1 and properties that are difficult to process may be improved, while a decrease of the energy density of the main active material may be minimized. That is, in the mixing ratio ranges and the manganese content range, the main active material may maintain the economic efficiency and structural stability, that are the advantages of the first particles PTC1, while simultaneously improving lifetime characteristics, and enabling easy processing. More particularly, by mixing the first particles PTC1 and the second particles PTC2 to form the main active material, low lifetime characteristics of the first particles PTC1 and the properties that are difficult to process may be improved. While the process may result in some unintended decrease in the energy density of the main active material, if the main active material satisfies the mixing ratio ranges and the manganese content range, the decrease in energy density may be minimized. Further, the decrease in energy density may be compensated for by adding third particles PTC3, which will be explained below.

The first active material may include the first particles PTC1, the second particles PTC2, and the third particles PTC3. In the first active material, the mixing ratio of the first and second particles PTC1 and PTC2 to the third particles PTC3 may be about 50:50 to about 85:15 based on 100 parts by weight of the first active material. In the first active material, the manganese content of the first active material may be about 50 mol% to about 70 mol%. The manganese amount means the amount of Mn relative to metal elements excluding lithium in the first active material. Based on 100 parts by weight of the first active material, the amount of the third particles PTC3 may be about 10 parts by weight to about 50 parts by weight, 15 parts by weight to about 50 parts by weight, or 30 parts by weight to about 50 parts by weight based on 100 parts by weight of the first active material.

When the first active material includes the first particles PTC1, the second particles PTC2, and the third particles PTC3 so as to satisfy the mixing ratio ranges and the manganese content, the material may have all advantages of the first particles PTC1, the second particles PTC2, and the third particles PTC3. More particularly, the first active material may have all the advantages of the first particles PTC1, i.e., economic feasibility, structural stability and high energy density, the advantages of the second particles PTC2, i.e., high average voltage and excellent lifetime characteristics, and the advantages of the third particles PTC3, i.e., excellent lifetime characteristics and high energy density. That is, energy density, average voltage and lifetime characteristics may be improved in an economically feasible manner.

The positive electrode active material according to the present disclosure may have high pellet density (PD). In embodiments, the pellet density of the positive electrode active material of the present disclosure may be about 2 g/cc to about 5 g/cc, or about 2.5 g/cc to about 4 g/cc, or about 2.5 g/cc to about 3.0 g/cc. This may be higher than the pellet density in common lithium iron phosphate (LFP) batteries. High pellet density may contribute to improving the lifetime characteristics and increasing the energy density of a rechargeable lithium battery. Uniform and dense distribution of the active material may help the consistent maintenance of an electrochemical reaction during charging and discharging processes, which may contribute to improving lifetime characteristics. More active material may be stored in a limited space, more energy may be stored per unit volume, thereby increasing energy density.

A rechargeable lithium battery including the first active material according to the present disclosure may have a high average voltage. In embodiments, the average voltage of the rechargeable lithium battery of the present disclosure may be about 3 V to about 4 V. In other embodiments, the average voltage range of the present disclosure may be about 3.6 V to about 3.8 V. Since the energy density is proportional to an average voltage, the average voltage may contribute to increasing energy density.

The rechargeable lithium battery including the first active material according to the present disclosure may have high energy density. In embodiments, the energy density of the rechargeable lithium battery of the present disclosure may be about 400 Wh/kg to about 600 Wh/kg, about 450 Wh/kg to about 600 Wh/kg, or about 500 Wh/kg to about 600 Wh/kg.

The rechargeable lithium battery including the first active material according to the present disclosure may have high lifetime characteristics. In an embodiment, the rechargeable lithium battery of the present disclosure may have capacity retention of about 97% or more after 50 charge/discharge cycles under certain current and voltage conditions. In an embodiment, if initially charging under constant current (about 0.2 C) and constant voltage (about 4.25 V) conditions, initially discharging until about 2.5 V under constant current (about 0.2 C) conditions, and then charging and discharging 50 times at about 0.2 C/0.2 C, the capacity retention may be about 95% to about 100%, or about 97% to about 99%.

## Second Active Material

Referring to FIGS. 8 and 9, a second active material according to some embodiments of the present disclosure will be explained in more detail.

The second active material according to the present disclosure may include the first particles PTC1, the second particles PTC2, the third particles PTC3, and the fourth particles PTC4. That is, the second active material according to the present disclosure may additionally include the fourth particles PTC4 in the above-described first active material.

Because the second active material according to the present disclosure includes the fourth particles PTC4 in addition to the first particles PTC1, the second particles PTC2, and the third particles PTC3, capacity and energy density may be further increased.

The amount of the fourth particles PTC4 may be about 5 parts by weight to about 35 parts by weight, or about 15 parts by weight to about 25 parts by weight based on 100 parts by weight of the second active material. If the amount of the fourth particles PTC4 satisfies these ranges, capacity and energy density may be further increased, while lifetime reduction and the deterioration of stability of the second active material may be minimized.

The second active material may include the first particles PTC1, the second particles PTC2, the third particles PTC3, and the fourth particles PTC4, while the first particles PTC1, the second particles PTC2, and the third particles PTC3 may constitute the first active material. In the second active material, the mixing ratio of the first active material and the fourth particles PTC4 may be about 75:25 to about 85:15 based on the weight. Otherwise, the mixing ratio may be about 65:35 to about 95:5. In the second active material, the manganese content of the second active material may be about 50 mol% to about 60 mol%. The manganese content of the second active material means the amount of manganese relative to metal elements in the second active material excluding lithium. In some cases, the manganese content of the first active material may be about 50 to about 80 mol%.

If the second active material satisfies the mixing ratio ranges, the manganese content ranges of the second active material, and the manganese content ranges of the first active material, the energy density may be maximized. That is, in the mixing ratio ranges, the manganese content ranges of the second active material, and the manganese content ranges of the first active material, the second active material may improve energy density properties, while maintaining the advantages of the first active material, i.e., the economic efficiency, structural stability, high lifetime characteristics and easy processability. More particularly, the purpose of preparing the second active material by mixing the first active material and the fourth particles PTC4 may be to prepare a positive electrode active material having higher energy density than the first active material. The process may result in some unintended decrease in the average voltage and lifetime of the second active material. But if the second active material satisfies the mixing ratio ranges, the manganese content ranges of the second active material, and the manganese content ranges of the first active material, the decrease in the average voltage and lifetime may be minimized.

The rechargeable lithium battery including the second active material according to the present disclosure may have high energy density. In embodiments, the energy density of the rechargeable lithium battery of the present disclosure may be about 400 Wh/kg to about 650 Wh/kg, about 500 Wh/kg to about 650 Wh/kg, or about 550 Wh/kg to about 600 Wh/kg.

The second active material according to the present disclosure may have high pellet density (PD). In embodiments, the pellet density of the second active material of the present disclosure may be about 2 g/cc to about 5 g/cc, or about 2.5 g/cc to about 4 g/cc, or about 2.5 g/cc to about 3.0 g/cc. This may be higher than the pellet density of common LFP batteries. High pellet density may contribute to improving the lifetime characteristics and increasing the energy density of a rechargeable lithium battery. Uniform and dense distribution of the active material may help the consistent maintenance of an electrochemical reaction during charging and discharging processes, which may contribute to improving lifetime characteristics. Since more active material may be stored in a limited space, more energy may be stored per unit volume, contributing to the increase in energy density.

A rechargeable lithium battery including the second active material according to the present disclosure may have a high average voltage. In embodiments, the average voltage of the rechargeable lithium battery of the present disclosure may be about 3 V to about 4 V. In other embodiments, the average voltage range of the present disclosure may be about 3.6 V to about 3.8 V. Because the energy density is proportional to an average voltage, the above-described high average voltage may contribute to increasing energy density.

The rechargeable lithium battery including the second active material according to the present disclosure may have high lifetime characteristics. In an embodiment, the rechargeable lithium battery of the present disclosure may have capacity retention of about 97% or more after 50 charge/discharge cycles under certain current and voltage conditions. In an embodiment, if initially charging under constant current (about 0.2 C) and constant voltage (about 4.25 V) conditions, initially discharging until about 2.5 V under constant current (about 0.2 C) conditions, and then charging and discharging 50 times at about 0.2 C/0.2 C, the capacity retention may be about 95% to about 100%, or about 97% to about 99%.

Hereinafter, the Examples and Comparative Examples of the present disclosure will be described. However, the Examples are only illustrations of the present disclosure, and the present disclosure is not limited to the Examples.

## Preparation Example 1-1: Preparation of First Particles with Single Particle Form

A $Mn_{0.6}Fe_{0.4}PO_4$ manganese iron phosphate precursor, lithium carbonate, and titanium dioxide were mixed in a molar ratio of (Mn+Fe):Li:Ti=about 1: 1.03:0.004. To the mixture, 10 wt% of glucose was added. A wet grinding process was performed by a ball milling the mixture. The mixture was evaporated and dried in a heating furnace tray, and put in a vacuum oven for drying at about 120 °C for about 4 hours. The dried mixture was baked under a nitrogen atmosphere at about 75 0°C for about 10 hours. The baked product was ground to obtain first particles in a single particle form. The average diameter of the first particles was about 0.5 $\mu$m to about 2.5 $\mu$m.

## Preparation Example 1-2: Preparation of First Particles in Secondary Particle Form

A $Mn_{0.6}Fe_{0.4}PO_4$ manganese iron phosphate precursor, lithium carbonate, and titanium dioxide were mixed in a molar ratio of (Mn+Fe):Li:Ti=about 1:1.03:0.004. To the mixture, 10 wt% of glucose was added. A mixture as a slurry was evaporated and dried by spray drying with a spray pressure of about 0.5 MPa at temperature conditions of about 230 °C. The dried mixture was baked under a nitrogen atmosphere at about 750 °C for about 10 hours to obtain first particles in a secondary particle form. The average size of the primary particles in the first particles was about 50 nm to about 150 nm.

**Preparation Example 1-3: Preparation of Second Particles**

In 100 ml of distilled water, 0.170 g of $MnSO_4H_2O$, and 0.228 g of $(NH_4)_2S_2O_8$ were dissolved, and sulfuric acid was added thereto to adjust pH to 1, followed by reacting at about 130 °C for about 10 hours to obtain a solid precipitate. The precipitate thus obtained was washed with distilled water several times and dried at about 300 °C for about 3 hours to obtain $MnO_2$ as a solid having an average diameter of about 5 $\mu$m.

$Li_2CO_3$ and the $MnO_2$ thus synthesized were mixed so that the molar ratio of lithium and manganese became about 1:2, then the mixture was heated at about 600 °C for about 10 hours to synthesize $LiMn_2O_4$ particles having an average diameter of about 7 $\mu$m.

**Preparation Example 1-4: Preparation of Third Particles**

A nickel-based precursor was prepared using a co-precipitation method. In particular, nickel sulfate (Ni-$SO_4 \cdot 6H_2O$), cobalt sulfate, ($CoSO_4 \cdot 7H_2O$) and manganese sulfate ($Mn(SO_4)_3 \cdot H_2O$) in a molar ratio of about 6:1:3 as the raw materials of a nickel-based metal hydroxide were dissolved in distilled water as a solvent to prepare a metal raw material mixture. The metal raw material mixture, ammonia water, and sodium hydroxide were put in a reactor and reacted. A slurry solution in the reactor was filtered and washed with distilled water with high purity. The washed material was dried in a hot air oven at about 210 °C for about 24 hours to obtain a precursor ($Ni_{0.6}Co_{0.1}Mn_{0.3}(OH)_2$) powder with an average diameter of about 4 $\mu$m.

The nickel-based precursor and anhydrous lithium hydroxide (LiOH) were dry mixed using a Henschel mixer. The mixing was performed so that the molar ratio of lithium and transition metal was about 1:1. The transition metal means the total sum of transition metals (Ni+Co+Mn) contained in the nickel-based precursor. A melting agent was additionally added to the mixture and heat treatment (i.e., baking process) was performed under an oxygen atmosphere at about 850 °C for about 15 hours to synthesize third particles as a nickel-based positive electrode active material. The third particles were ground using a Jet mill with a pressure of about 3 bars.

The third particles were added to distilled water and washed. Boron oxide and aluminium oxide corresponding to about 3 mol% based on the total sum of the transition metals of the third particles were added to perform boron and aluminium coating. The third particles were dried at about 150 °C for about 12 hours and heated (i.e., surface treated) under an oxygen atmosphere at about 700 °C for about 15 hours. The chemical formula of the third particles thus prepared was $LiNi_{0.6}Co_{0.1}Mn_{0.3}O_2$.

**Preparation Example 1-5: Preparation of Fourth Particles**

A transition metal precursor of $(Ni_{0.35}Mn_{0.65})(OH)_2$ and a lithium source of $Li_2CO_3$ were mixed in a weight ratio of Ni:Li=about 1:1.3. Baking was performed under an oxygen atmosphere at about 600 °C for about 10 hours to obtain second particles in a secondary particle form. The average diameter of the second particles was about 5-10 $\mu$m, and the average diameter of the primary particles was about 100 nm to about 500 nm.

**Preparation Example 2-1: Preparation of Main Active Material**

A main active material was prepared by mixing the first particles of Preparation Example 1-1 and the second particles of Preparation Example 1-3 in a weight ratio of about 65:35. In this case, the amount of manganese relative to metal elements in the main active material excluding lithium was about 60 mol%.

**Preparation Example 2-2**

A main active material was prepared by mixing the first particles of Preparation Example 1-1 and the second particles of Preparation Example 1-3 in a weight ratio of about 50:50. In this case, the amount of manganese relative to metal elements in the main active material excluding lithium was about 70 mol%.

**Preparation Example 2-3**

A main active material was prepared by mixing the first particles of Preparation Example 1-1 and the second particles of Preparation Example 1-3 in a weight ratio of about 40:60. In this case, the amount of manganese relative to metal elements in the main active material excluding lithium was about 80 mol%.

### Example 1-1: Preparation of First Active Material

A first active material was prepared by mixing the main active material of Preparation Example 2-1 and the third particles of Preparation Example 1-4 in a weight ratio of about 70:30. The amount of manganese of the first active material was about 50 mol%.

### Example 1-2

A first active material was prepared by mixing the main active material of Preparation Example 2-2 and the third particles of Preparation Example 1-4 in a weight ratio of about 85:15. The amount of manganese of the first active material was about 65 mol%.

### Example 1-3

A first active material was prepared by mixing the main active material of Preparation Example 2-2 and the third particles of Preparation Example 1-4 in a weight ratio of about 70:30. The amount of manganese of the first active material was about 60 mol%.

### Example 1-4

A first active material was prepared by mixing the main active material of Preparation Example 2-2 and the third particles of Preparation Example 1-4 in a weight ratio of about 60:40. The amount of manganese of the first active material was about 55 mol%.

### Example 1-5

A first active material was prepared by mixing the main active material of Preparation Example 2-3 and the third particles of Preparation Example 1-4 in a weight ratio of about 80:20. The amount of manganese of the first active material was about 70 mol%.

### Example 1-6

A first active material was prepared by mixing the main active material of Preparation Example 2-3 and the third particles of Preparation Example 1-4 in a weight ratio of about 70:30. The amount of manganese of the first active material was about 65 mol%.

### Example 1-7

A first active material was prepared by mixing the main active material of Preparation Example 2-3 and the third particles of Preparation Example 1-4 in a weight ratio of about 60:40. The amount of manganese of the first active material was about 60 mol%.

### Example 1-8

A first active material was prepared by mixing the main active material of Preparation Example 2-3 and the third particles of Preparation Example 1-4 in a weight ratio of about 50:50. The amount of manganese of the first active material was about 55 mol%.

### Example 1-9

A first active material was prepared by mixing the main active material of Preparation Example 2-1 and the third particles of Preparation Example 1-4 in a weight ratio of about 90:10. The amount of manganese of the first active material was about 60 mol%.

### Example 1-10

A first active material was prepared by mixing the main active material of Preparation Example 2-1 and the third particles of Preparation Example 1-4 in a weight ratio of about 80:20. The amount of manganese of the first active material was about 60 mol%.

### Example 1-11

A first active material was prepared by mixing the main active material of Preparation Example 2-1 and the third particles of Preparation Example 1-4 in a weight ratio of about 70:30. The amount of manganese of the first active material was about 60 mol%.

### Example 1-12

A first active material was prepared by mixing the main active material of Preparation Example 2-2 and the third particles of Preparation Example 1-4 in a weight ratio of about 90:10. The amount of manganese of the first active material was about 55 mol%.

### Example 1-13

A first active material was prepared by mixing the main active material of Preparation Example 2-2 and the third particles of Preparation Example 1-4 in a weight ratio of about 80:20. The amount of manganese of the first active material was about 55 mol%.

### Example 1-14

A first active material was prepared by mixing the main active material of Preparation Example 2-2 and the third particles of Preparation Example 1-4 in a weight ratio of about 70:30. The amount of manganese of the first active material was about 55 mol%.

### Example 2-1: Preparation of Second Active Material

A second active material was prepared by mixing the first active material of Example 1-9 and the fourth particles of Preparation Example 1-5 in a weight ratio of about 85:15.

### Example 2-2

A second active material was prepared by mixing the first active material of Example 1-9 and the fourth particles of Preparation Example 1-5 in a weight ratio of about 80:20.

### Example 2-3

A second active material was prepared by mixing the first active material of Example 1-9 and the fourth particles of Preparation Example 1-5 in a weight ratio of about 75:25.

### Example 2-4

A second active material was prepared by mixing the first active material of Example 1-10 and the fourth particles of Preparation Example 1-5 in a weight ratio of about 85:15.

### Example 2-5

A second active material was prepared by mixing the first active material of Example 1-10 and the fourth particles of Preparation Example 1-5 in a weight ratio of about 80:20.

### Example 2-6

A second active material was prepared by mixing the first active material of Example 1-10 and the fourth particles of Preparation Example 1-5 in a weight ratio of about 75:25.

**Example 2-7**

A second active material was prepared by mixing the first active material of Example 1-11 and the fourth particles of Preparation Example 1-5 in a weight ratio of about 85:15.

**Example 2-8**

A second active material was prepared by mixing the first active material of Example 1-11 and the fourth particles of Preparation Example 1-5 in a weight ratio of about 80:20.

**Example 2-9**

A second active material was prepared by mixing the first active material of Example 1-11 and the fourth particles of Preparation Example 1-5 in a weight ratio of about 75:25.

**Example 2-10**

A second active material was prepared by mixing the first active material of Example 1-12 and the fourth particles of Preparation Example 1-5 in a weight ratio of about 85:15.

**Example 2-11**

A second active material was prepared by mixing the first active material of Example 1-12 and the fourth particles of Preparation Example 1-5 in a weight ratio of about 80:20.

**Example 2-12**

A second active material was prepared by mixing the first active material of Example 1-12 and the fourth particles of Preparation Example 1-5 in a weight ratio of about 75:25.

**Example 2-13**

A second active material was prepared by mixing the first active material of Example 1-13 and the fourth particles of Preparation Example 1-5 in a weight ratio of about 85:15.

**Example 2-14**

A second active material was prepared by mixing the first active material of Example 1-13 and the fourth particles of Preparation Example 1-5 in a weight ratio of about 80:20.

**Example 2-15**

A second active material was prepared by mixing the first active material of Example 1-13 and the fourth particles of Preparation Example 1-5 in a weight ratio of about 75:25.

**Example 2-16**

A second active material was prepared by mixing the first active material of Example 1-14 and the fourth particles of Preparation Example 1-5 in a weight ratio of about 85:15.

**Example 2-17**

A second active material was prepared by mixing the first active material of Example 1-14 and the fourth particles of Preparation Example 1-5 in a weight ratio of about 80:20.

**Example 2-18**

A second active material was prepared by mixing the first active material of Example 1-14 and the fourth particles of Preparation Example 1-5 in a weight ratio of about 75:25.

**Comparative Example 1**

A second active material was prepared by mixing the first active material of Example 1-9 and the fourth particles of Preparation Example 1-5 in a weight ratio of about 95:5.

**Comparative Example** 2

A second active material was prepared by mixing the first active material of Example 1-9 and the fourth particles of Preparation Example 1-5 in a weight ratio of about 90:10.

**Comparative Example 3**

A second active material was prepared by mixing the first active material of Example 1-9 and the fourth particles of Preparation Example 1-5 in a weight ratio of about 70:30.

**Comparative Example 4**

A second active material was prepared by mixing the first active material of Example 1-9 and the fourth particles of Preparation Example 1-5 in a weight ratio of about 65:35.

**Comparative Example 5**

A second active material was prepared by mixing the first active material of Example 1-10 and the fourth particles of Preparation Example 1-5 in a weight ratio of about 95:5.

**Comparative Example 6**

A second active material was prepared by mixing the first active material of Example 1-10 and the fourth particles of Preparation Example 1-5 in a weight ratio of about 90:10.

**Comparative Example 7**

A second active material was prepared by mixing the first active material of Example 1-10 and the fourth particles of Preparation Example 1-5 in a weight ratio of about 70:30.

**Comparative Example 8**

A second active material was prepared by mixing the first active material of Example 1-10 and the fourth particles of Preparation Example 1-5 in a weight ratio of about 65:35.

**Comparative Example 9**

A second active material was prepared by mixing the first active material of Example 1-11 and the fourth particles of Preparation Example 1-5 in a weight ratio of about 95:5.

**Comparative Example 10**

A second active material was prepared by mixing the first active material of Example 1-11 and the fourth particles of Preparation Example 1-5 in a weight ratio of about 90:10.

**Comparative Example 11**

A second active material was prepared by mixing the first active material of Example 1-11 and the fourth particles of Preparation Example 1-5 in a weight ratio of about 70:30.

**Comparative Example 12**

A second active material was prepared by mixing the first active material of Example 1-11 and the fourth particles of Preparation Example 1-5 in a weight ratio of about 65:35.

**Comparative Example 13**

A second active material was prepared by mixing the first active material of Example 1-12 and the fourth particles of Preparation Example 1-5 in a weight ratio of about 95:5.

**Comparative Example 14**

A second active material was prepared by mixing the first active material of Example 1-12 and the fourth particles of Preparation Example 1-5 in a weight ratio of about 90:10.

**Comparative Example 15**

A second active material was prepared by mixing the first active material of Example 1-12 and the fourth particles of Preparation Example 1-5 in a weight ratio of about 70:30.

**Comparative Example 16**

A second active material was prepared by mixing the first active material of Example 1-12 and the fourth particles of Preparation Example 1-5 in a weight ratio of about 65:35.

**Comparative Example 17**

A second active material was prepared by mixing the first active material of Example 1-13 and the fourth particles of Preparation Example 1-5 in a weight ratio of about 95:5.

**Comparative Example 18**

A second active material was prepared by mixing the first active material of Example 1-13 and the fourth particles of Preparation Example 1-5 in a weight ratio of about 90:10.

**Comparative Example 19**

A second active material was prepared by mixing the first active material of Example 1-13 and the fourth particles of Preparation Example 1-5 in a weight ratio of about 70:30.

**Comparative Example 20**

A second active material was prepared by mixing the first active material of Example 1-13 and the fourth particles of Preparation Example 1-5 in a weight ratio of about 65:35.

**Comparative Example 21**

A second active material was prepared by mixing the first active material of Example 1-14 and the fourth particles of Preparation Example 1-5 in a weight ratio of about 95:5.

**Comparative Example 22**

A second active material was prepared by mixing the first active material of Example 1-14 and the fourth particles of Preparation Example 1-5 in a weight ratio of about 90:10.

**Comparative Example 23**

A second active material was prepared by mixing the first active material of Example 1-14 and the fourth particles of Preparation Example 1-5 in a weight ratio of about 70:30.

**Comparative Example 24**

A second active material was prepared by mixing the first active material of Example 1-14 and the fourth particles of Preparation Example 1-5 in a weight ratio of about 65:35.

**Manufacture of Positive Electrode**

95 wt% of the final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied on an aluminium current collector, dried, and rolled to manufacture a positive electrode.

**Manufacture of Negative Electrode**

A Si-graphite composite, a binder, and a conductive material were mixed in an N-methylpyrrolidone solvent to prepare a negative electrode active material slurry. The negative electrode active material slurry was applied on a copper current collector, dried and rolled to manufacture a negative electrode.

**Fabrication of Rechargeable Lithium Battery**

A 2032 type coin half-cell was formed using the positive electrode prepared and a lithium metal electrode as the counter electrode. A separator having a thickness of about 16 $\mu$m and composed of a porous polyethylene (PE) film was disposed between the positive electrode and the lithium metal counter electrode, and an electrolyte solution was injected to fabricate a rechargeable lithium battery. As the electrolyte, an electrolyte solution obtained by mixing 1.3 M LiPF$_6$ with a mixture solvent of ethylene carbonate (EC), ethyl methyl carbonate (EMC), and dimethyl carbonate (DMC) in a volume ratio of about 3:4:3 was used.

**Evaluation Example 1: Analysis on the Surface of Positive Electrode Active Material**

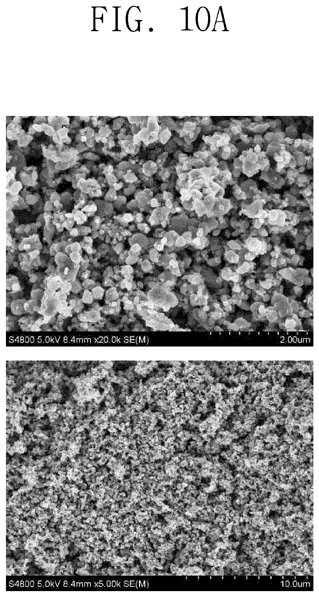

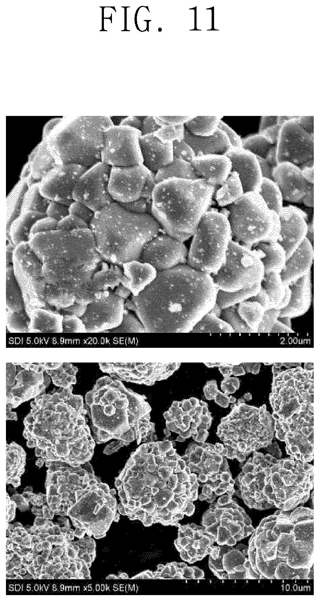

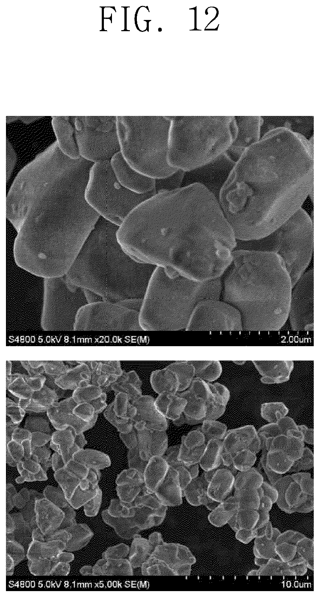

The scanning electron microscope (SEM) images of the first particles (single particle form) prepared in Preparation Example 1-1 are shown in FIG. 10A. The SEM images of the first particles (secondary particle form) prepared in Preparation Example 1-2 are shown in FIG. 10B. The SEM images of the second particles prepared in Preparation Example 1-3 are shown in FIG. 11. The SEM images of the third particles prepared in Preparation Example 1-4 are shown in FIG. 12. The SEM images of the fourth particles prepared in Preparation Example 1-5 are shown in FIG. 13.

Referring to FIG. 10A, it can be seen that the first particles according to Preparation Example 1-1 of the present disclosure have a fine single particle form with a nanometer size. Referring to FIG. 10B, it can be seen that the first particles according to Preparation Example 1-2 of the present disclosure have a spherical secondary particle form in which primary particles are agglomerated. In addition, it can be seen that the primary particles of Preparation Example 1-2 have a smaller size and are more uniform compared to the primary particles of Preparation Example 1-1.

Referring to FIG. 11, it can be seen that the second particles according to Preparation Example 1-3 of the present disclosure have a secondary particle form in which primary particles are agglomerated.

Referring to FIG. 12, it can be seen that the third particles according to Preparation Example 1-4 of the present disclosure have a single particle form.

Referring to FIG. 13, it can be seen that the fourth particles according to Preparation Example 1-5 of the present disclosure have a secondary particle form in which primary particles are agglomerated.

**Evaluation Example 2: Evaluation of Active Material**

The average pellet density (PD) was measured using the positive electrode active materials of Preparation Example 1-2, Examples 1-1 to 2-18, and Comparative Examples 1 to 24, and the results are shown in Tables 1 and 2 below. The average pellet density was measured by putting 3 grams of a positive electrode active material in a pellet mold and applying a force of about 4.0 US tons for about 30 seconds.

**Evaluation Example 3: Battery Evaluation**

The properties of rechargeable lithium batteries fabricated using the positive electrode active materials of Preparation Example 1-2, Examples 1-1 to 2-18, and Comparative Examples 1 to 24 were evaluated, and the results are shown in Tables 1 and 2 below.

Rechargeable lithium batteries were initially charged under constant current (about 0.2 C) and constant voltage (about 4.25 V) conditions, and, after resting for about 10 minutes, discharged under constant current (about 0.2 C) conditions until about 2.5 V to carry out initial charging and discharging. Then, charging and discharging were repeated 50 times with about 0.2 C/0.2 C. The evaluation results of the battery properties are shown in Tables 1 and 2 below.

Table 1

| Division | Mixing weight ratio Main active material | Third particles | Mn content of first active material (mol%) | Formation | | | | Lifetime (%, @50cy) | PD (g /cc) | ED (Wh/kg) |
|---|---|---|---|---|---|---|---|---|---|---|
| | | | | 0.2 C Charge (mAh/g) | 0.2 C Discharge (mAh/g) | 0.2 C Efficiency (%) | Average voltage (V) | | | |
| Preparation Example 1-1 | - | - | - | 155 | 145 | 93.5% | 3.60 | 94.5 | 2.23 | 511 |
| Example 1-1 | 70 | 30 | 50 | 164.8 | 150.5 | 91.3% | 3.70 | 97.0 | 2.61 | 557 |
| Example 1-2 | 85 | 15 | 65 | 146.9 | 137.1 | 93.3% | 3.76 | 97.2 | 2.56 | 505 |
| Example 1-3 | 70 | 30 | 60 | 160.3 | 146.8 | 91.6% | 3.74 | 97.6 | 2.66 | 548 |
| Example 1-4 | 60 | 40 | 55 | 169.2 | 153.3 | 90.6% | 3.73 | 98.1 | 2.72 | 571 |
| Example 1-5 | 80 | 20 | 70 | 147.9 | 137.5 | 93.0% | 3.78 | 98.0 | 2.63 | 511 |
| Example 1-6 | 70 | 30 | 65 | 157.3 | 144.3 | 91.8% | 3.76 | 98.2 | 2.69 | 541 |
| Example 1-7 | 60 | 40 | 60 | 166.6 | 151.2 | 90.7% | 3.75 | 98.5 | 2.75 | 566 |
| Example 1-8 | 50 | 50 | 55 | 176.0 | 158.0 | 89.8% | 3.73 | 98.9 | 2.81 | 589 |
| Example 1-9 | 90 | 10 | 60 | 148.2 | 138.6 | 93.5% | 3.70 | 97.6 | 2.61 | 502 |
| Example 1-10 | 80 | 20 | 60 | 151.4 | 140.3 | 92.7% | 3.70 | 97.7 | 2.61 | 513 |
| Example 1-11 | 70 | 30 | 50 | 164.8 | 150.5 | 91.3% | 3.70 | 97.0 | 2.61 | 557 |
| Example 1-12 | 90 | 10 | 55 | 142.4 | 133.9 | 94.0% | 3.73 | 97.1 | 2.72 | 485 |
| Example 1-13 | 80 | 20 | 55 | 151.4 | 140.3 | 92.7% | 3.73 | 97.3 | 2.72 | 516 |
| Example 1-14 | 70 | 30 | 60 | 160.3 | 146.8 | 91.6% | 3.74 | 97.6 | 2.66 | 548 |

EP 4 641 655 A1

Table 2

| Division | Mixing weight ratio | | Formation | | | | Lifetime (%, @50cy) | PD (g /cc) | ED (Wh/kg) |
|---|---|---|---|---|---|---|---|---|---|
| | First active material | Fourth particles | 0.2 C Charge (mAh/g) | 0.2 C Discharge (mAh/g) | 0.2 C Efficiency (%) | Average voltage (V) | | | |
| Comparative Example 1 | 95 | 5 | 156 | 143.4 | 91.90% | 3.76 | 97.8 | 2.64 | 537 |
| Comparative Example 2 | 90 | 10 | 163.8 | 148.1 | 90.40% | 3.76 | 97.8 | 2.64 | 553 |
| Example 2-1 | 85 | 15 | 171.6 | 152.9 | 89.10% | 3.75 | 97.9 | 2.65 | 558 |
| Example 2-2 | 80 | 20 | 179.4 | 157.7 | 87.90% | 3.75 | 97.9 | 2.64 | 565 |
| Example 2-3 | 75 | 25 | 187.2 | 162.5 | 86.80% | 3.74 | 97.9 | 2.64 | 570 |
| Comparative Example 3 | 70 | 30 | 195 | 167.2 | 85.80% | 3.72 | 97.7 | 2.64 | 574 |
| Comparative Example 4 | 65 | 35 | 202.8 | 172 | 84.80% | 3.67 | 97.6 | 2.65 | 573 |
| Comparative Example 5 | 95 | 5 | 159 | 145 | 91.20% | 3.76 | 98 | 2.65 | 541 |
| Comparative Example 6 | 90 | 10 | 166.6 | 149.7 | 89.80% | 3.76 | 98 | 2.65 | 548 |
| Example 2-4 | 85 | 15 | 174.3 | 154.4 | 88.60% | 3.75 | 98.1 | 2.66 | 553 |
| Example 2-5 | 80 | 20 | 181.9 | 159.1 | 87.40% | 3.75 | 98.1 | 2.65 | 559 |
| Example 2-6 | 75 | 25 | 189.5 | 163.7 | 86.40% | 3.74 | 98.1 | 2.65 | 564 |
| Comparative Example 7 | 70 | 30 | 197.2 | 168.4 | 85.40% | 3.72 | 97.9 | 2.65 | 567 |
| Comparative Example 8 | 65 | 35 | 204.8 | 173.1 | 84.50% | 3.67 | 97.8 | 2.66 | 566 |
| Comparative Example 9 | 95 | 5 | 171.8 | 154.7 | 90.10% | 3.76 | 98.1 | 2.65 | 578 |
| Comparative Example 10 | 90 | 10 | 178.7 | 158.9 | 88.90% | 3.76 | 98.1 | 2.65 | 582 |
| Example 2-7 | 85 | 15 | 185.7 | 163 | 87.80% | 3.75 | 98.2 | 2.66 | 585 |
| Example 2-8 | 80 | 20 | 192.6 | 167.2 | 86.80% | 3.75 | 98.2 | 2.65 | 590 |
| Example 2-9 | 75 | 25 | 199.6 | 171.4 | 85.90% | 3.74 | 98.2 | 2.65 | 592 |
| Comparative Example 11 | 70 | 30 | 206.6 | 175.6 | 85.00% | 3.72 | 98 | 2.65 | 594 |
| Comparative Example 12 | 65 | 35 | 213.5 | 179.7 | 84.20% | 3.67 | 97.9 | 2.66 | 590 |
| Comparative Example 13 | 95 | 5 | 150.5 | 138.9 | 92.30% | 3.78 | 97.7 | 2.75 | 517 |
| Comparative Example 14 | 90 | 10 | 158.6 | 143.9 | 90.70% | 3.78 | 97.7 | 2.75 | 529 |
| Example 2-10 | 85 | 15 | 166.7 | 148.9 | 89.30% | 3.77 | 97.8 | 2.76 | 535 |
| Example 2-11 | 80 | 20 | 174.7 | 153.9 | 88.10% | 3.77 | 97.8 | 2.75 | 542 |
| Example 2-12 | 75 | 25 | 182.8 | 158.9 | 86.90% | 3.76 | 97.8 | 2.75 | 549 |

(continued)

| Division | Mixing weight ratio | | Formation | | | | Lifetime (%, @50cy) | PD (g /cc) | ED (Wh/kg) |
|---|---|---|---|---|---|---|---|---|---|
| | First active material | Fourth particles | 0.2 C Charge (mAh/g) | 0.2 C Discharge (mAh/g) | 0.2 C Efficiency (%) | Average voltage (V) | | | |
| Comparative Example 15 | 70 | 30 | 190.9 | 163.9 | 85.90% | 3.74 | 97.6 | 2.75 | 553 |
| Comparative Example 16 | 65 | 35 | 199 | 168.9 | 84.90% | 3.69 | 97.5 | 2.76 | 553 |
| Comparative Example 17 | 95 | 5 | 159 | 145 | 91.20% | 3.78 | 97.9 | 2.75 | 550 |
| Comparative Example 18 | 90 | 10 | 166.6 | 149.7 | 89.80% | 3.78 | 97.9 | 2.75 | 562 |
| Example 2-13 | 85 | 15 | 174.3 | 154.4 | 88.60% | 3.77 | 98 | 2.75 | 567 |
| Example 2-14 | 80 | 20 | 181.9 | 159.1 | 87.40% | 3.77 | 98 | 2.75 | 573 |
| Example 2-15 | 75 | 25 | 189.5 | 163.7 | 86.40% | 3.76 | 98 | 2.75 | 578 |
| Comparative Example 19 | 70 | 30 | 197.2 | 168.4 | 85.40% | 3.74 | 97.8 | 2.75 | 581 |
| Comparative Example 20 | 65 | 35 | 204.8 | 173.1 | 84.50% | 3.69 | 97.7 | 2.74 | 580 |
| Comparative Example 21 | 95 | 5 | 167.5 | 151.2 | 90.30% | 3.78 | 98.1 | 2.74 | 568 |
| Comparative Example 22 | 90 | 10 | 174.7 | 155.5 | 89.00% | 3.78 | 98.1 | 2.74 | 573 |
| Example 2-16 | 85 | 15 | 181.8 | 159.9 | 87.90% | 3.77 | 98.2 | 2.74 | 576 |
| Example 2-17 | 80 | 20 | 189 | 164.2 | 86.90% | 3.77 | 98.2 | 2.74 | 581 |
| Example 2-18 | 75 | 25 | 196.2 | 168.6 | 85.90% | 3.76 | 98.2 | 2.74 | 585 |
| Comparative Example 23 | 70 | 30 | 203.4 | 173 | 85.00% | 3.74 | 98 | 2.74 | 587 |
| Comparative Example 24 | 65 | 35 | 210.6 | 177.3 | 84.20% | 3.69 | 97.9 | 2.73 | 584 |

Referring to Table 1, it can be seen that the batteries including the first active materials according to Examples 1-1 to 1-14 have higher average voltage, higher lifetime characteristics, higher pellet density, and substantially the same or better energy density compared to the battery including only the first particles PTC1 of Preparation Example 1-1. That is, it can be seen that, within the mixing weight ratio and manganese content range of the Examples in Table 1, the first active material may improve average voltage, lifetime characteristics and energy density, while being economic feasibility. Referring to Table 2, it can be seen that the batteries including the second active materials according to Examples 2-1 to 2-3 of the present disclosure have higher lifetime characteristics, the same as or better pellet density, and better energy density compared to the batteries including the positive electrode active materials according to Comparative Examples 1 to 4. Since efficiency properties fall below the efficiency of a common negative electrode, it can be seen that Comparative Examples 3 and 4 correspond to a section that inhibits the purpose of mixing.

Referring to Table 2, it can be seen that the rechargeable lithium batteries including the second active materials according to Examples 2-4 to 2-6 have the same or better pellet density and similar or better energy density compared to the rechargeable lithium batteries according to Comparative Examples 5 to 8. Since efficiency properties fall below the efficiency of a common negative electrode, it can be seen that Comparative Examples 7 and 8 correspond to a section that inhibits the purpose of mixing.

Referring to Table 2, it can be seen that the rechargeable lithium batteries including the second active materials according to Examples 2-7 to 2-9 have higher lifetime characteristics, the same or better pellet density, and similar or better energy density compared to the rechargeable lithium batteries including the positive electrode active materials according to Comparative Examples 9 to 12. Since efficiency properties fall below the efficiency of a common negative electrode, it can be seen that Comparative Examples 11 and 12 correspond to a section that inhibits the purpose of mixing.

Referring to Table 2, it can be seen that the rechargeable lithium batteries including the second active materials according to Examples 2-10 to 2-12 have higher lifetime characteristics, the same or better pellet density, and similar or better energy density compared to the rechargeable lithium batteries including the positive electrode active materials according to Comparative Examples 13 to 16. Since efficiency properties fall below the efficiency of a common negative electrode, it can be seen that Comparative Examples 15 and 16 correspond to a section that inhibits the purpose of mixing.

Referring to Table 2, it can be seen that the rechargeable lithium batteries including the second active materials according to Examples 2-13 to 2-15 have higher lifetime characteristics, the same or better pellet density, and similar or better energy density compared to the rechargeable lithium batteries including the positive electrode active materials according to Comparative Examples 17 to 20. Since efficiency properties fall below the efficiency of a common negative electrode, it can be seen that Comparative Examples 19 and 20 correspond to a section that inhibits the purpose of mixing.

Referring to Table 2, it can be seen that the rechargeable lithium batteries including the second active materials according to Examples 2-16 to 2-18 have higher lifetime characteristics, the same or better pellet density, and similar or better energy density compared to the rechargeable lithium batteries including the positive electrode active materials according to Comparative Examples 21 to 24. Since efficiency properties fall below the efficiency of a common negative electrode, it can be seen that Comparative Examples 23 and 24 correspond to a section that inhibits the purpose of mixing.

Summarizing the results in Table 2, the second active materials according to Examples 2-1 to 2-18 of the present disclosure may improve capacity and energy density properties, while minimizing the efficiency degradation of the second active materials in the mixing weight ratio and manganese content ranges of the Examples in Table 2.

A positive electrode active material according to the present disclosure may exhibit improved economic feasibility, structural stability, and energy density by including first particles having an olivine structure.

A positive electrode active material according to the present disclosure may exhibit improved average voltage and lifetime characteristics by including second particles having a spinel structure.

A positive electrode active material according to the present disclosure may exhibit improved lifetime characteristics and energy density by including third particles having a layered structure.

A positive electrode active material according to the present disclosure may additionally include fourth particles, and accordingly, capacity and energy density may be further improved.

A positive electrode active material according to the present disclosure may have improved energy density, average voltage, and lifetime characteristics while securing economic feasibility by mixing the first particles, second particles, and third particles in an appropriate ratio. And, if the fourth particles are additionally included, capacity and energy density may be even further improved.

Although the embodiments of the present disclosure have been described, it is understood that the present disclosure is not limited to these embodiments. Rather, various changes and modifications can be made by one ordinary skilled in the art within the scope of the present disclosure.

Certain embodiments are set out in the following clauses:

Clause 1. A positive electrode for a rechargeable lithium battery, the positive electrode comprising: a positive electrode current collector; and a positive electrode active material layer on the positive electrode current collector, wherein the positive electrode active material layer comprises a positive electrode active material as hereinbefore described and/or as claimed in the accompanying claims, a conductive material, and a binder.

Clause 2. The positive electrode for a rechargeable lithium battery of Clause 1, wherein the binder content is about 0.5 parts by weight to about 5 parts by weight based on 100 parts by weight of the positive electrode active material layer.

Clause 3. The positive electrode for a rechargeable lithium battery of Clause 1 or Clause 2, wherein the binder comprises at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon.

Clause 4. The positive electrode for a rechargeable lithium battery of any preceding Clause, wherein the conductive material content is about 0.5 parts by weight to about 5 parts by weight based on 100 parts by weight of the positive electrode active material layer.

Clause 5. The positive electrode for a rechargeable lithium battery of any preceding Clause, wherein the conductive material comprises a carbon-based material, a metal-based material having a metal powder or metal fiber form, a conductive polymer, or a mixture thereof.

**Claims**

1. A positive electrode active material comprising:

   first particles comprising a compound of Chemical Formula 1 and having an olivine structure;
   second particles comprising a compound of Chemical Formula 2 and having a spinel structure; and
   third particles comprising a compound of Chemical Formula 3 and having a layered structure,
   wherein an amount of the third particles is about 10 parts by weight to about 50 parts by weight based on 100 parts by weight of the positive electrode active material:

   wherein Chemical Formula 1 is:

   $$Li_{a1}Mn_{x1}Fe_{y1}A_{z1}PO_{4-c1}$$

   with $0.8 < a1 \leq 1.2$, $0.4 \leq x1 \leq 0.8$, $0.15 \leq y1 \leq 0.6$, $0 \leq z1 \leq 0.05$, $0 \leq c1 \leq 0.05$, $x1 + y1 + z1 = 1$ and with A being at least one of Al, Ti, V, and Mg,
   wherein Chemical Formula 2 is:

   $$Li_{a2}Mn_{x2}B_{y2}O_{4-c2}$$

   with $0.8 < a2 \leq 1.2$, $1.9 \leq x2 \leq 2.05$, $0 \leq y2 \leq 0.05$, $0 \leq c2 \leq 0.05$, and with B being at least one of Al and Mg, and
   wherein Chemical Formula 3 is:

   $$Li_{a3}Ni_{x3}Co_{y3}Mn_{z3}E_{w1}O_{2-c3}$$

   with $0.8 < a3 \leq 1.2$, $0.5 \leq x3 \leq 0.8$, $0 \leq y3 \leq 0.10$, $0.1 \leq z3 \leq 0.35$, $0 < w1 < 0.1$, $0 \leq c3 \leq 0.05$, and E being at least one of Al, Ti, Mg, Zr, Mo, and Nb.

2. The positive electrode active material of claim 1, further comprising fourth particles comprising a compound of Chemical Formula 4:

   $$Li_{a4}Ni_{x4}Mn_{y4}D_{z4}O_{c4}$$

   with $1.1 < a4 \leq 1.6$, $0.2 \leq x4 \leq 0.5$, $0.5 \leq y4 \leq 0.8$, $0 \leq z4 \leq 0.05$, $2 \leq c4 \leq 2.3$, and with D being at least one transition metal having an oxidation number of 4.

3. The positive electrode active material of claim 2, wherein the amount of the fourth particles is about 15 parts by weight to about 25 parts by weight based on 100 parts by weight of the positive electrode active material.

4. The positive electrode active material of claim 2 or claim 3, wherein the first, second, and third particles constitute a first active material,

   wherein the first, second, third, and fourth particles constitute a second active material,
   wherein an amount of manganese in the first active material is about 50 mol% to about 80 mol%, and
   wherein an amount of manganese in the second active material is about 50 mol% to about 60 mol%.

5. The positive electrode active material of any one of claims 2 to 4, wherein an average diameter of the fourth particles is about 5 $\mu$m to about 10 $\mu$m.

6. The positive electrode active material of any preceding claim, wherein an amount of the third particles is about 30 parts by weight to about 50 parts by weight on based on 100 parts by weight of the first active material.

7. The positive electrode active material of any preceding claim 1, wherein the first and second particles constitute a main active material,

   wherein the first, second, and third particles constitute a first active material, and
   wherein an amount of the main active material is about 50 parts by weight to about 85 parts by weight based on 100 parts by weight of the first active material.

8. The positive electrode active material of any preceding claim, wherein an amount of the manganese in the positive electrode active material is about 50 mol% to about 70 mol%.

9. The positive electrode active material of any preceding claim, wherein the first and second particles constitute a main active material, and a mixing ratio of the first particles and the second particles in the main active material is about 40:60 to about 65:35 based on a weight.

10. The positive electrode active material of any preceding claim, wherein the first particles have a single particle form, an average diameter of the first particles is about 0.5 $\mu$m to about 2.5 $\mu$m, and an average size of first primary particles is about 100 nm to about 200 nm.

11. The positive electrode active material of any preceding claim, wherein the first particles have a secondary particle form in which a plurality of first primary particles are agglomerated, an average diameter of the first particles is about 3 $\mu$m to about 10 $\mu$m, and an average diameter of the first primary particles is about 50 nm to about 150 nm.

12. The positive electrode active material of any preceding claim, wherein an average diameter of the second particles is about 3 $\mu$m to about 10 $\mu$m.

13. The positive electrode active material of any preceding claim, wherein a porosity of the first particles is about 20% to about 40%.

14. The positive electrode active material of any preceding claim, wherein a span value of the first particles is about 0.3 to about 0.75.

15. A positive electrode for a rechargeable lithium battery, the positive electrode comprising:

a positive electrode current collector; and
a positive electrode active material layer on the positive electrode current collector,
wherein the positive electrode active material layer comprises the positive electrode active material according to any one of claims 1 to 14, a conductive material, and a binder.

# FIG. 1

# FIG. 2

FIG. 3

# FIG. 4

100

50

72

40

71

10 30 20

# FIG. 5

FIG. 6

FIG. 7

FIG. 8

# FIG. 9

# FIG. 10A

# FIG. 10B

FIG. 11

FIG. 12

FIG. 13

Europäisches
Patentamt

European
Patent Office

Office européen
des brevets

# EUROPEAN SEARCH REPORT

**Application Number**

EP 25 16 9153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 682 951 A (LISHEN QINGDAO NEW ENERGY CO LTD) 1 September 2023 (2023-09-01) * paragraphs [0047], [0051], [0054]; claims 1, 8-10 * | 1-15 | INV. H01M4/131 C01G53/00 H01M4/36 H01M4/505 H01M4/525 H01M4/58 |
| X | EP 4 345 950 A1 (BYD CO LTD [CN]) 3 April 2024 (2024-04-03) * paragraph [0073]; claim 2 * | 1,10 | |
| A | US 2023/216047 A1 (ZHANG ZHENGUO [CN] ET AL) 6 July 2023 (2023-07-06) * the whole document * | 1-15 | |
| A | CN 116 565 153 A (NINGDE CONTEMPORARY AMPEREX TECH CO LTD) 8 August 2023 (2023-08-08) * the whole document * | 1-15 | |

**TECHNICAL FIELDS SEARCHED (IPC)**

H01M
C01G

The present search report has been drawn up for all claims

| Place of search | Date of completion of the search | Examiner |
|---|---|---|
| The Hague | 22 August 2025 | Scarfiello, Canio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9153

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2025

| Patent document cited in search report | | Publication date | Patent family member(s) | | Publication date |
|---|---|---|---|---|---|
| CN 116682951 | A | 01-09-2023 | NONE | | |
| EP 4345950 | A1 | 03-04-2024 | AU | 2022350974 A1 | 25-01-2024 |
| | | | CA | 3224474 A1 | 30-03-2023 |
| | | | CN | 115863620 A | 28-03-2023 |
| | | | EP | 4345950 A1 | 03-04-2024 |
| | | | JP | 2024531047 A | 29-08-2024 |
| | | | KR | 20240017066 A | 06-02-2024 |
| | | | US | 2024145715 A1 | 02-05-2024 |
| | | | WO | 2023046066 A1 | 30-03-2023 |
| US 2023216047 | A1 | 06-07-2023 | CN | 116941069 A | 24-10-2023 |
| | | | EP | 4250401 A1 | 27-09-2023 |
| | | | JP | 7588208 B2 | 21-11-2024 |
| | | | JP | 2023553772 A | 26-12-2023 |
| | | | KR | 20230062803 A | 09-05-2023 |
| | | | US | 2023216047 A1 | 06-07-2023 |
| | | | WO | 2023070368 A1 | 04-05-2023 |
| CN 116565153 | A | 08-08-2023 | CN | 116565153 A | 08-08-2023 |
| | | | EP | 4379836 A1 | 05-06-2024 |
| | | | US | 2024186510 A1 | 06-06-2024 |
| | | | WO | 2023142670 A1 | 03-08-2023 |

EPO FORM P0459

For more details about this annex : see Official Journal of the European Patent Office, No. 12/82